(19) Europäisches Patentamt / European Patent Office / Office européen des brevets

(11) **EP 4 208 413 B1**

(12) **EUROPEAN PATENT SPECIFICATION**

(45) Date of publication and mention of the grant of the patent:
**03.06.2026 Bulletin 2026/23**

(21) Application number: **21770083.0**

(22) Date of filing: **31.08.2021**

(51) International Patent Classification (IPC):
**C02F 5/10** *(2023.01)*    **C02F 103/08** *(2006.01)*
**C02F 103/02** *(2006.01)*

(52) Cooperative Patent Classification (CPC):
**C02F 5/10;** C02F 2103/023; C02F 2103/08;
C02F 2303/08; C02F 2303/22

(86) International application number:
**PCT/JP2021/031956**

(87) International publication number:
**WO 2022/050276 (10.03.2022 Gazette 2022/10)**

(54) **ACRYLATE COPOLYMERS FOR REDUCING SCALE FORMATION**

ACRYLATCOPOLYMERE ZUR REDUZIERUNG VON KESSELSTEINBILDUNG

COPOLYMÈRES ACRYLATES POUR LA RÉDUCTION DE FORMATION DE TARTRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2020 PCT/JP2020/033464**

(43) Date of publication of application:
**12.07.2023 Bulletin 2023/28**

(73) Proprietor: **Kurita Water Industries Ltd.
Tokyo 164-0001 (JP)**

(72) Inventors:
• **WOLF, Florian
  68165 Mannheim (DE)**
• **HATER, Wolfgang
  68165 Mannheim (DE)**

• **DISCI-ZAYED, Duygu
  68165 Mannheim (DE)**
• **LEANEY, Deborah
  68165 Mannheim (DE)**
• **STRATMANN, Anika
  68165 Mannheim (DE)**

(74) Representative: **Meissner Bolte Partnerschaft
mbB
Patentanwälte Rechtsanwälte
Postfach 86 06 24
81633 München (DE)**

(56) References cited:
**EP-A2- 0 123 482    AU-A- 5 913 765
US-A- 4 797 224    US-A- 4 839 417**

**Description**

**Technical Field**

The present invention relates to the use of copolymers of acrylic acid and $C_1$-$C_3$ alkyl acrylates with an $M_w$ of from 5800 to 15000 g/mol, calculated as its sodium salt, for reducing the formation of inorganic scale in water-bearing systems. The acrylate content in the copolymer is from 3 to 50 mol-%, and at least 50 mol-% of the polymerized $C_1$-$C_3$ alkyl acrylate units are polymerized units of a $C_2$-$C_3$ alkyl acrylate. The invention also relates to a method for reducing the formation of inorganic scale in a water-bearing system comprising adding such a copolymer to the water contained in the water bearing system.

**Background of the invention**

Scale formation is a serious problem in many water bearing systems, such as water steam circuits, cooling circuits, membrane plants, thermal sea water desalination or geothermal units. The problems caused by scale formation are well known and evident - inter alia plugging or at least partial obstruction of tubes, pipes and valves; in thermal devices interference with heat transfer and formation of hot spots leading to local overheating; performance loss of desalination units due to precipitation of scale on the equipment surface; etc. The nature of scales can vary considerably; the most important scale-forming matter being scale-forming salts, such as $CaCO_3$, $Ca_3(PO_4)_2$, $CaSO_4$, $Mg(OH)_2$, $Fe(OH)_3$, $Zn(OH)_2$ and metal silicates, especially silicates with polyvalent counter cations, e.g. calcium, magnesium, iron and aluminium silicates, as well as less well-defined precipitates, in particular silicium-based precipitates, for example co-precipitates of silica and scale-forming salts, such as the above-mentioned. The mitigation of scale formation, for example by addition of chemical additives which are able to prevent the formation of scale by complete inhibition or delay of crystal formation or by reducing or preventing the deposition of solid matter is an important economic requirement.

The use of anti-scaling additives in aqueous systems to inhibit the deposition of scale formed from the salts of divalent metals such as calcium and magnesium is standard practice in a number of industries. The reduction in the build-up of scale which can be achieved is beneficial in reducing fouling of the system and the frequency with which the system must be closed down in order to remove scale deposits.

Numerous anti-scaling additives have been proposed as useful additives to aqueous systems including certain polyphosphates, polyacrylic acids, polymethacrylic acids, lignin sulphonic acids and their salts, tannin, naphthalene sulphonic acid formaldehyde condensation products, polyphosphates such as tripolyphosphate and hexametaphosphate, phosphonic acids, polymaleic acids and hydrolysed copolymers and terpolymers of maleic anhydride and the salts of these acids. The use of these anti-scaling additives, particularly the acrylic acid and maleic acid polymers, is widely recognised as being effective in inhibiting the build-up of calcium carbonate and calcium sulfate scale.

There is however a lack of scale inhibitors with a wide range of applicability or with an excellent efficiency against difficult-to-treat types of scales, such as $Fe(OH)_3$, $Zn(OH)_2$ and silicium-based inorganic scale, e.g. metal silicates or silicium-based co-precipitates, e.g. co-precipitates of silica with one or more scale-forming salts.

US 4,008,164 relates to copolymers of acrylic acid and methyl acrylate having a molecular weight of from 3000 to 20000 g/mol prepared by copolymerizing acrylic acid and methyl acrylate in a molar excess of acrylic acid over methyl acrylate of at least 3:1. These copolymers are said to inhibit calcium deposition from calcium-containing water.

US 4,517,098 and the corresponding EP 0123482 A2 suggest copolymers of 85-97% by weight of acrylic acid and 3-15% by weight of one or more $C_2$-$C_8$-alkyl acrylates or $C_1$-$C_8$-alkyl methacrylates having a weight average molecular weight between 2000 and 5000 g/mol as scale inhibitors for $CaCO_3$ or $CaSO_4$ scale. The copolymers disclosed therein show performance against $CaCO_3$ or $CaSO_4$ crystal formation and show moreover dispersing capability against kaolin and calcium carbonate particles. In one example a copolymer of 94.9% by weight of acrylic acid and 5.1% by weight of butyl acrylate and a weight average molecular weight of above the claimed upper limit of 5000 g/mol, namely of 7340 g/mol, is disclosed; this shows however a dissatisfactory performance, especially when compared with other acrylic acid/butyl acrylate copolymers of smaller molecular weight.

While the copolymers of US 4,517,098 and the corresponding EP 0123482 A2 show a dispersing effect against kaolin particles, meaning that the polymers used in this document disperse already present solid matter and thus reduce the deposition thereof on surfaces, it is desirable to avoid the formation of silicate-containing solid matter from the outset. In other words, it is desirable not only to keep already formed solid matter in dispersion and avoid its deposition, but additionally or alternatively to suppress the formation of silicate-containing crystals or of amorphous silicate forms. AU 59137 relates to additives for the inhibition or modification of scale formation on heat transfer surfaces of apparatuses for distillation and evaporation of sea water and other waters containing dissolved mineral salts, where the additives comprise water-soluble, essentially linear co- and terpolymers formed from at least one monomer containing acid groups or precursors thereof, such as acrylic acid, methacrylic acid, the salts thereof, or maleic acid (anhydride). A specific example is a copolymer obtained from 10% ethyl acrylate and 90% acrylic acid. The type of percentage (i.e. whether mol-% or weight-%) is not indicated. The molecular weights of the copolymers are in the range of 1,000 to 50,000, preferably from 15,000 to 25,000, where however the type of molecular weight and the method for its determination is not indicated. The acrylic acid/ethyl acrylate copolymer used in some of the examples is obtained from 10% ethyl acrylate and 90% acrylic acid, has a molecular weight of 13,000 and is used against $Mg(OH)_2$ and $CaCO_3$ scale. The effect of the copolymer on the scale-forming matter in sea water and other hard water is shown indirectly by measurements of the heat transfer coefficient. Further relevant documents are US 4 839 417 A and US 4 797 224 A.

Generally speaking, the problem of the formation of scale types which are more difficult to control than calcium- and magnesium-containing scales, such as zinc hydroxide, iron hydroxide or silicium-containing inorganic scale, is still not satisfactorily solved. Concerning silicium-containing inorganic scale, a still underestimated and not yet satisfactorily solved problem is for example the formation of silicium-containing precipitates formed in the presence of certain metal cations. According to D.L. Gallup, Mineral Scales in Biological and Industrial Systems, 2013, 1st edition, CRC Press, Chapter 11, p. 201 et seq., Na, K, Ca, Mg, Sr and Ba cations can depress the solubility of silica in water. More problematically, Li, Ca, Mg, Cu, Fe, Mn, Zn, and Al cations complex or co-precipitate with silica to form scales. Moreover, under certain pH, temperature and pressure conditions, silicic acid and silicate may undergo oligo- or polymerization or form colloids and thus give also rise to scale formation. Also, there is still room for improvement as regards calcium- and magnesium-containing scales, especially scales different from the typically occurring $CaCO_3$ or $CaSO_4$ scales, e.g. $Ca_3(PO_4)_2$ scale as it may form in phosphate-containing water.

It was the object of the present invention to provide an anti-scaling agent which efficiently reduces or even inhibits the formation of inorganic scale. In particular, the anti-scaling agent should reduce or even inhibit the formation of scale which is more difficult to control than typical calcium containing scales, such as zinc hydroxide, iron hydroxide, iron oxide and silicate-containing scale or, more generally speaking, silicium-containing inorganic scale, in particular silicium-containing inorganic scale as formed in the presence of certain metal cations, especially polyvalent cations. The anti-scaling agent should also reduce or even inhibit the formation of calcium- and magnesium-containing scales, such as the typically occurring $CaCO_3$ or $CaSO_4$ scales, but in particular also Mg and Ca scales different therefrom, e.g. $Ca_3(PO_4)_2$ scale. In particular, the anti-scaling agent should not be limited to a dispersing effect, but instead or at least additionally suppress the formation of scale-forming solid matter from the outset; in case of silicate for example the formation of silicate-containing crystals or amorphous forms of solid silicates.

## Summary of the invention

The object is achieved by the use of specific acrylic acid/$C_1$-$C_3$ alkyl acrylate copolymers.

The invention relates more precisely to the use of a copolymer which consists of at least 95 % by weight, based on the total weight of the copolymer in its acid form, of a combination of polymerized units of acrylic acid and polymerized units of a $C_1$-$C_3$ alkyl acrylate, where the amount of polymerized units of the $C_1$-$C_3$ alkyl acrylate is in the range from 3 to 50 mol-%, based on the total amount of polymerized units, where at least 50 mol-% of the polymerized units of the $C_1$-$C_3$ alkyl acrylate are polymerized units of a $C_2$-$C_3$ alkyl acrylate and where the copolymer in the form of its sodium salt has a weight average molecular weight $M_w$ in the range from 5800 to 15000 g/mol, as determined by gel permeation chromatography in buffered water at pH 7, for reducing the formation of inorganic scale in water-bearing systems.

The invention relates moreover to a method for reducing the formation of inorganic scale in a water-bearing system, which comprises the addition of a copolymer as defined above to the water contained in the water bearing system.

The above-defined copolymers are however also useful as dispersants; i.e. their effect is not limited to reducing or inhibiting the formation of inorganic scale in water-bearing systems, but they can also be used for dispersing inorganic scale already forming solid matter in the water bearing system, such as scarcely or water-insoluble silica or iron(III) oxide, thus reducing or avoiding the formation of deposits on surfaces in the water bearing system. The invention relates thus also to the use of the above-defined copolymers for dispersing inorganic scale in water-bearing systems.

## Detailed description of the invention

<u>Definitions</u>

Here and in the following, the term "$C_1$-$C_3$ alkyl" refers to methyl, ethyl, n-propyl and isopropyl.

Here and in the following, the phrase "reduction or inhibition of the formation of scale" means that the formation of the respective scale type in a water bearing system is significantly reduced by at least 15%, in particular by at least 20% or at least 25% compared to a water bearing system without anti-scaling agent. "Reduction or inhibition of the formation of scale" means moreover that the copolymers used according to the invention prevent or delay or reduce the precipitation of scale-forming substances (generally salts), i.e. they prevent or delay or reduce the crystallization or the formation of amorphous solid forms of scale-forming substances.

Here and in the following, water bearing system means any system, e.g. any container, device or arrangement of devices, wherein water is kept, transported, used or treated and where internal surfaces are in contact with water.

The molecular weights of the copolymers as used in the present invention are given with respect to their sodium salts, i.e. they refer to values determined for copolymers in which all acidic groups of the copolymer are present in neutralized form, to be more precise in the form of the respective sodium salt.

The term "silicate", as used in the present invention and when not specified otherwise, relates to any inorganic silicium-containing inorganic matter which (potentially) forms scale or deposits under certain conditions, in particular under conditions under which the respective water bearing system is operated. The term encompasses the academic silicate definition, i.e. the salt of monomeric or polymeric silicic acid composed essentially of Si, O, the metal of the counter cation and optionally also H. Generally the silicic acid is monomeric, dimeric or trimeric. "Essentially" means to express that the salt may also contain minor amounts of other elements, however not more than 2% by weight, preferably not more than 1% by weight, in particular not more than 0.5% by weight, relative to the overall weight of the silicate. The term encompasses however also silica or silicic acid which under the given conditions, and especially in the presence of metal cations, in particular of polyvalent metal cations, such as $Mg^{2+}$, $Ca^{2+}$, $Al^{3+}$, $Fe^{2+}$ or $Fe^{3+}$, can precipitate to more or less defined deposits.

The specification "inorganic" means to distinguish inorganic scale or potentially scale-forming inorganic matter from organic scale, such as it occurs for example in petroleum production facilities, where the organic scale is based on precipitated waxes etc. Inorganic silicates are salts and are to be distinguished from organic silicates, i.e. from esters of mono- or polysilicic acid.

In some instances, for example where the amount of silicates present in the to-be-treated water is specified, the silicates are termed as "water-soluble" or short "soluble". This solubility refers to the silicate solubility at 25°C, pH 7, under ambient pressure and in the absence of polyvalent metal cations. The water-soluble silicates have a water solubility of at least 5 g/l, e.g. at least 10 g/l or at least 50 g/l or at least 100 g/l.

Unless specified otherwise, where the amounts or concentrations of components are given as "ppm", this corresponds to 1 g of component per 1,000,000 g of reference substance. If the unit "ppm" is used to define the concentration of a component in water, given the density of water as close to 1 g/l, 1 ppm can also be understood as 1 g of the component per 1 $m^3$ of water.

Embodiments of the invention

The below description of general and preferred embodiments of the invention relate both to the use and to the method of the invention.

The copolymers as used in the present invention in the form of their sodium salt have a weight average molecular weight $M_w$ in the range of from 5800 to 15000 g/mol (e.g. 5800 to 12000 g/mol) and specifically from 5800 to 12000 g/mol, as determined by gel permeation chromatography (of the sodium salt) in buffered water at pH 7.

The number average molecular weight $M_n$ of the copolymers is preferably in the range of from 1000 to 15000 g/mol, more preferably in the range of from 1200 to 10000 g/mol, in particular in the range of from 1300 to 5000 g/mol and specifically in the range of from 1300 to 3000, as determined by gel permeation chromatography (of the sodium salt) in buffered water at pH 7.

The polydispersity of the copolymers in the form of their sodium salt, i.e. the ratio of the weight average molecular weight to the number average molecular weight $M_w/M_n$, is preferably in the range of from 1.1 to 10, in particular from 2 to 6, specifically from 3 to 5.

Both weight average molecular weights ($M_w$) and number average molecular weights ($M_n$) as referred herein relate to the molecular weight of the sodium salt of the respective copolymer as determined by gel permeation chromatography, in the following abbreviated as GPC. Gel permeation chromatography is usually carried out by using crosslinked acrylate copolymers of defined pore size as stationary phase, water buffered to pH 7 as the eluent and polyacrylic acid sodium salts as standards. Further details on GPC are given below in the experimental part.

The amount of polymerized units of the $C_1$-$C_3$ alkyl acrylate is preferably in the range of from 5 to 40 mol-%, more preferably from 5 to 30 mol-%, in particular from 8 to 30 mol-%, specifically from 10 to 30 mol-%, and very specifically from 10 to 25 mol-%, based on the total amount of polymerized units in the copolymer.

The amount of polymerized $C_1$-$C_3$ alkyl acrylate in the copolymer can be easily determined by standard techniques, such as NMR, and is moreover calculable from the amount of monomers used in the polymerization reaction and the amount of non-reacted monomers.

The molar ratio of polymerized acrylic acid to the overall amount of polymerized $C_1$ - $C_3$ alkyl acrylates is preferably in the range of from 50:50 to 97:3, more preferably in the range of from 60:40 to 95:5, even more preferably in the range of from 70:30 to 95: 10, in particular in the range of from 70:30 to 92:8, more particularly in the range of from 70:30 to 90:10 and specifically in the range of from 75:25 to 90:10.

The $C_1$-$C_3$ alkyl acrylate is preferably ethyl acrylate or a mixture of ethyl acrylate with one or more of the other $C_1$-$C_3$ alkyl acrylates, to be more precise with one or more of methyl acrylate, propyl acrylate and/or isopropyl acrylate.

More preferably, the polymerized $C_1$-$C_3$ alkyl acrylate is ethyl acrylate or a mixture comprising at least 90% by weight of ethyl acrylate, based on the total amount of polymerized $C_1$-$C_3$ alkyl acrylates, the difference to 100% by weight being of course composed of one or more of methyl acrylate, propyl acrylate and/or isopropyl acrylate.

Besides polymerized acrylic acid and the one or more polymerized $C_1$-$C_3$ alkyl acrylates, the copolymers as used in the present invention may comprise up to 5% by weight, preferably at most 2% by weight and in particular at most 1% by weight, based on the total weight of the copolymer in its acid form, of one or more polymerized monomers different from acrylic acid and the $C_1$-$C_3$ alkyl acrylate. Preferably they comprise at most 2% by weight and in particular at most 1% by weight, based on the total weight of the copolymer in its acid form, of one or more polymerized monomers different from acrylic acid and the $C_1$-$C_3$ alkyl acrylate. In other words, the copolymers consist preferably of at least 98% by weight and in particular of at least 99% by weight, based on the total weight of the copolymer in its acid form, of polymerized units of acrylic acid and at least one $C_1$-$C_3$ alkyl acrylate.

Examples of other polymerized comonomers which may be present beside polymerized acrylic acid and the polymerized $C_1$-$C_3$ alkyl acrylate include, but are not limited to, monoethylenically unsaturated monocarboxylic acids having 4 to 6 carbon atoms, such as methacrylic acid, monoethylenically unsaturated dicarboxylic acids having 4 to 6 carbon atoms, such as maleic acid, or the anhydrides thereof, such as maleic anhydride, water-soluble neutral monoethylenically unsaturated monomers having a solubility in deionized water of at least 80 g/L at 20°C, including the amides of monoethylenically unsaturated monocarboxylic acids having 3 to 6 carbon atoms, such as acrylamide or methacry-lamide, or the hydroxy-$C_2$-$C_4$-alkyl esters of monoethylenically unsaturated monocarboxylic acids having 3 to 6 carbon atoms, such as hydroxyethyl acrylate, hydroxypropyl acrylate, hydroxyethyl methacrylate or hydroxypropyl methacrylate. In particular, the copolymers of the present invention do not contain any ethylenically unsaturated monomer having a phosphorus-containing functional group or a sulfur-containing functional group. In a specific embodiment, the copolymers as used in the present invention do not comprise any other polymerized comonomer, i.e. they consist essentially of polymerized acrylic acid and the one or more polymerized $C_1$-$C_3$ alkyl acrylates. "Essentially" in this context is meant to express that the copolymer may comprise minor amounts, e.g. at most 1% by weight, preferably at most 0.5% by weight, of other components which stem from impurities of the monomer sources, but which are not introduced on purpose.

Particular preference is given to copolymers which do not contain more than 1000 ppm of phosphorous, and which contain in particular less than 500 ppm of phosphorous.

Particular preference is given to copolymers which consist to at least 95% by weight, in particular at least 98% by weight and especially at least 99% by weight, based on the total weight based of the copolymer in its acid form, of polymerized monomers of acrylic acid and ethyl acrylate, where the molar ratio of polymerized acrylic acid to the polymerized ethyl acrylate is preferably in the range from 50:50 to 97:3, more preferably in the range of from 60:40 to 95:5, even more preferably in the range of from 70:30 to 95:5, in particular in the range of from 70:30 to 92:8, more particularly in the range of from 70:30 to 90:10 and specifically in the range of from 75:25 to 90:10.

Even more preference is given to copolymers which consist to at least 95% by weight, in particular at least 98% by weight and especially at least 99% by weight, based on the total weight based of the copolymer in its acid form, of the polymerized monomers of acrylic acid and ethyl acrylate;

where the molar ratio of polymerized acrylic acid to the polymerized ethyl acrylate is in the range from 50:50 to 97:3, more preferably in the range of from 60:40 to 95:5, even more preferably in the range of from 70:30 to 95:5, in particular in the range of from 70:30 to 92:8, more particularly in the range of from 70:30 to 90:10 and specifically in the range of from 75:25 to 90:10;
where the weight average molecular weight $M_w$ of the copolymer in the form of its sodium salt ranges from 5800 to 15000 g/mol and specifically from 5800 to 12000 g/mol, as determined by gel permeation chromatography (of the sodium salt) in buffered water at pH 7;
where the number average molecular weight $M_n$ of the copolymer in the form of its sodium salt ranges from 1000 to 15000 g/mol, preferably from 1200 to 10000 g/mol, in particular from 1300 to 5000 g/mol and specifically from 1300 to 3000, as determined by gel permeation chromatography (of the sodium salt) in buffered water at pH 7; and
where the ratio $M_w/M_n$ is in the range of from 1.1 to 10, preferably in the range of from 2 to 6, in particular in the range of from 3 to 5.

Specifically, the copolymers consist to at least 98% by weight and especially at to least 99% by weight, based on the total weight based of the copolymer in its acid form, of the polymerized monomers of acrylic acid and ethyl acrylate;

where the molar ratio of polymerized acrylic acid to the polymerized ethyl acrylate is in the range of from 70:30 to 95:5,
where the weight average molecular weight $M_w$ of the copolymer in the form of its sodium salt ranges from 5800 to 12000 g/mol, as determined by gel permeation chromatography (of the sodium salt) in buffered water at pH 7;
where the number average molecular weight $M_n$ of the copolymer in the form of its sodium salt ranges from 1300 to 3000, as determined by gel permeation chromatography (of the sodium salt) in buffered water at pH 7; and

where the ratio $M_w/M_n$ is in the range of from 3 to 5.

More specifically, the copolymers consist to at least 99% by weight, based on the total weight based of the copolymer in its acid form, of the polymerized monomers of acrylic acid and ethyl acrylate;

where the molar ratio of polymerized acrylic acid to the polymerized ethyl acrylate is in the range of from 70:30 to 92:8;
where the weight average molecular weight $M_w$ of the copolymer in the form of its sodium salt ranges from 5800 to 12000 g/mol, as determined by gel permeation chromatography (of the sodium salt) in buffered water at pH 7;
where the number average molecular weight $M_n$ of the copolymer in the form of its sodium salt ranges from 1300 to 3000, as determined by gel permeation chromatography (of the sodium salt) in buffered water at pH 7; and
where the ratio $M_w/M_n$ is in the range of from 3 to 5.

Very specifically, the copolymers consist to at least 99% by weight, based on the total weight based of the copolymer in its acid form, of the polymerized monomers of acrylic acid and ethyl acrylate;

where the molar ratio of polymerized acrylic acid to the polymerized ethyl acrylate is in the range of from 75:25 to 90:10;
where the weight average molecular weight $M_w$ of the copolymer in the form of its sodium salt ranges from 5800 to 12000 g/mol, as determined by gel permeation chromatography (of the sodium salt) in buffered water at pH 7;
where the number average molecular weight $M_n$ of the copolymer in the form of its sodium salt ranges from 1300 to 3000, as determined by gel permeation chromatography (of the sodium salt) in buffered water at pH 7; and
where the ratio $M_w/M_n$ is in the range of from 3 to 5.

While the copolymers of the present invention may have any molecular architecture, they are preferably statistical copolymers. Statistical copolymers are understood as copolymers in which the distribution of the two monomers, here acrylic acid and the $C_1$-$C_3$ alkyl acrylate, in the chain follows a statistical distribution. In other words, the ratio of the monomers in a section corresponds to the molar ratio of the monomers (random distribution). The copolymers may have a linear or branched structure, but preferably they are essentially linear. The copolymers are in particular statistical copolymers having a linear structure.

The copolymers of the present invention can be prepared by copolymerizing acrylic acid and at least one $C_1$-$C_3$ alkyl acrylate by analogy to known methods for copolymerizing ethylenically unsaturated monomers as described e.g. in "Polymer Chemistry" by S. Koltzenburg, M. Maskos, O. Nuyken (Springer-Verlag 2017) and D. Braun et al, "Praktikum der Makromolekularen Stoffe" and the literature cited therein.

Preferably, the copolymer is obtainable by a free-radical solution copolymerization of acrylic acid and at least one $C_1$-$C_3$ alkyl acrylate. More preferably, the copolymer is obtainable by a free-radical aqueous solution copolymerization of acrylic acid and at least one $C_1$-$C_3$ alkyl acrylate. The term "free-radical polymerization" means that the polymerization of the ethylenically unsaturated monomers, here acrylic acid and the $C_1$-$C_3$ alkyl acrylate, is performed in the presence of a polymerization initiator, which, under polymerization conditions, forms radicals, either by thermal or photolytic decomposition or by a redox reaction. "Solution polymerization" means that in the polymerization reaction the monomers are present in solution in a solvent which is also capable of dissolving the copolymer. A free-radical solution copolymerization is thus a polymerization performed in solution and in the presence of a polymerization initiator forming radicals under polymerization conditions. "Aqueous solution polymerization" means that solvent comprises or consists of water.

Suitable solvents for performing the solution polymerization include water and polar organic solvents and mixtures thereof with water. Suitable polar organic solvents are those, which are at least partially miscible with water and which preferably are miscible with water to an extent of at least 100 g/L at 20°C and ambient pressure. Suitable organic solvents include, but are not limited to, $C_1$-$C_4$-alkanols, such as methanol, ethanol, propanol, isopropanol (= 2-propanol), n-butanol, sec-butanol (= 2-butanol) or isobutanol, glycols, such as ethylene glycol or diethylene glycol, dimethyl sulfoxide, dimethyl formamide, tetrahydrofuran or the dioxans. Preferred organic solvents are selected from $C_1$-$C_4$-alkanols, such as methanol, ethanol, propanol, isopropanol, n-butanol, sec-butanol or isobutanol, preferably isopropanol or sec-butanol. In particular, solvents for performing the solution polymerization are selected from water and mixtures of water and at least one polar organic solvent, preferably from water and mixtures of water and one or more $C_1$-$C_4$-alkanols. Especially, the solvent used for the copolymerisation of acrylic acid and the $C_1$-$C_3$ alkyl acrylate contains at least 50% by volume, in particular at least 70% by volume of water, based on the total amount of solvent.

If the copolymerisation of acrylic acid and the $C_1$-$C_3$ alkyl acrylate is conducted as a solution polymerization, the concentration of the monomers in the polymerization reaction may vary. In particular, the weight ratio of the monomers and the solvent will be in the range from 1:20 to 1.2:1, in particular in the range from 1:10 to 1:1 and especially in the range from 1:8 to 1:1.5.

The copolymerisation of acrylic acid and the $C_1$-$C_3$ alkyl acrylate is preferably a free-radical copolymerization and thus triggered by means of a free-radical polymerization initiator (free-radical initiator). These may in principle be peroxides or azo compounds. Of course, redox initiator systems may also be used.

Suitable peroxides may, in principle, be inorganic peroxides, such as hydrogen peroxide or peroxodisulfates, such as the mono- or di-alkali metal or ammonium salts of peroxodisulfuric acid, for example the mono- and disodium, -potassium or ammonium salts, or organic peroxides, e.g. peroxy acids and esters of peroxy acids, such as diisopropyl peroxydicarbonate, t-amyl perneodecanoate, t-butyl perneodecanoate, t-butyl perpivalate, t-amyl perpivalate, bis(2,4-dichlorobenzoyl) peroxide, diisononanoyl peroxide, didecanoyl peroxide, dioctanoyl peroxide, dilauroyl peroxide, bis(2-methylbenzoyl) peroxide, disuccinoyl peroxide, diacetyl peroxide, dibenzoyl peroxide, t-butyl per-2-ethylhexanoate, t-butyl-2-ethylhexanoate, bis(4-chlorobenzoyl) peroxide, t-butyl perisobutyrate, t-butyl permaleate, 1,1-bis(t-butyl peroxy) cyclohexane, t-butyl peroxyisopropylcarbonate, t-butyl perisononanoate, t-butyl peracetate, t-amyl perbenzoate, 3-(t-butylperoxy)-3-phenylphthalide or t-butyl perbenzoate, alkyl and cycloalkyl peroxides such as 1,1-bis(t-butyl peroxy)-3,5,5-trimethylcyclohexane, 2,2-bis(t-butylperoxy)butane (di-t-butyl peroxide), 2,2-bis-10-(t-butylperoxy)propane, 2,5-dimethyl-2,5-bis(t-butylperoxy)hexane, di(t-amyl) peroxide, $\alpha,\alpha'$-bis(t-butylperoxyisopropyl)benzene, 3,5-bis(t-butylperoxy)-3,5-dimethyl-1,2-dioxolane, di(t-butyl) peroxide, 2,5-dimethyl-2,5-bis(t-butylperoxy)hexyne, 3,3,6,6,9,9-hexamethyl-1,2,4,5-tetraoxacyclononane, p-menthane hydroperoxide, pinane hydroperoxide, aromatic peroxides such as dicumyl peroxide, diisopropylbenzene, mono-$\alpha$-hydroperoxide or cumene hydroperoxide. A suitable peroxide may also be hydrogen peroxide.

Typical azo initiators are, for example, 4,4'-azobis-4-cyanovaleric acid (ACVA), 2,2'-azobis(2-methylpropionamidine) dihydrochloride, 2,2'-azobis(2-methylpropionitrile) (AIBN), 2,2'-azobis(2-methylbutanenitrile), 2,2'-azobis(2,4-dimethylvaleronitrile), 1,1'-azobis(cyanocyclohexane), 1,1'-azobis(N,N-dimethylformamide), 2,2'-azobis(2-methylbutyronitrile), 2,2'-azobis(4-methoxy-2,4-dimethylvaleronitrile), 2,2'-azobis(2,4,4-trimethylpentane), 2,2'-azobisisobutyronitrile, 2,2'-azobis(2-methylbutyronitrile), 2,2'-azobis(2,4-dimethylvaleronitrile), 2,2'-azobis(4-methoxy-2,4-dimethylvaleronitrile), 1,1'-azobis(1-cyclohexanecarbonitrile), 2,2'-azobis(isobutyramide) dihydrate, 2-phenylazo-2,4-dimethyl-4-methoxyvaleronitrile, dimethyl 2,2'-azobisisobutyrate, 2-(carbamoylazo)isobutyronitrile, 2,2'-azobis(2,4,4-trimethylpentane), 2,2'-azobis(2-methyl propane), 2,2'-azobis(N,N'-dimethyleneisobutyramidine), 2,2'-azobis(N,N'-dimethyleneisobutyramidine) hydrochloride, 2,2'-azobis(2-amidinopropane), 2,2'-azobis(2-amidinopropane) hydrochloride, 2,2'-azo-bis(2-methyl-N-[1,1-bis(hydroxymethyl)ethyl]propionamide), azobis(2-amidopropane) dihydrochloride or 2,2'-azobis(2-methyl-N[1,1-bis(hydroxymethyl)-2-hydroxyethyl]propionamide).

Typical redox initiators are, for example, mixtures of an oxidizing agent, such as hydrogen peroxide, peroxodisulfates or aforementioned peroxide compounds, and a reducing agent. Corresponding reducing agents, which may be used are sulfur compounds with a low oxidation state, such as alkali metal sulfites, for example potassium and/or sodium sulfite, alkali metal hydrogensulfites, for example potassium and/or sodium hydrogensulfite, alkali metal metabisulfites, for example potassium and/ or sodium metabisulfite, formaldehydesulfoxylates, for example potassium and/or sodium formaldehydesulfoxylate, alkali metal salts, specifically potassium and/or sodium salts of aliphatic sulfinic acids and alkali metal hydrogensulfides, for example potassium and/or sodium hydrogensulfide, salts of polyvalent metals, in particular Co(II) salts and Fe(II) salts, such as iron(II) sulfate, iron(II) ammonium sulfate or iron(II) phosphate, but also dihydroxymaleic acid, benzoin and/or ascorbic acid, and reducing saccharides, such as sorbose, glucose, fructose and/or dihydroxyacetone.

Preferably, the free-radical polymerization initiator comprises an inorganic peroxide, in particular a peroxodisulfate, such as the mono- or di-alkali metal or ammonium salts of peroxodisulfuric acid. In particular, the free-radical polymerization initiator is a redox initiator, which comprises an inorganic peroxide, in particular a peroxodisulfate, such as the mono- or di-alkali metal or ammonium salts of peroxodisulfuric acid as the oxidizing agent. In these redox initiators, the reducing agent is preferably selected from the group of sulfur compounds with a low oxidation state, such as alkali metal sulfites, for example potassium and/or sodium sulfite, alkali metal hydrogensulfites, for example potassium and/or sodium hydrogensulfite, alkali metal metabisulfites, for example potassium and/or sodium metabisulfite, formaldehydesulfoxylates, for example potassium and/or sodium formaldehydesulfoxylate, alkali metal salts, specifically potassium and/or sodium salts of aliphatic sulfinic acids and alkali metal hydrogensulfides, for example potassium and/or sodium hydrogensulfide. In these redox initiators, the molar amount of the reducing agent will exceed the molar amount of the oxidizing agent. In particular, the molar ratio of the reducing agent to the oxidizing agent is in the range from 1.5:1 to 100:1 and in particular in the range from 2:1 to 50:1.

The molecular weight of the copolymer can be adjusted by choosing a proper relative amount of the free-radical polymerization initiator with respect to the monomers to be polymerized. As a rule of thumb, increasing the relative amount of the free-radical polymerization initiator will result in a decrease of the molecular weight, while decreasing the relative amount of the free-radical polymerization initiator will result in an increased molecular weight. If the free-radical polymerization initiator is selected from redox initiators, an increase of the molar ratio of the reducing agent to the oxidizing agent will likewise result in a decreased molecular weight and vice versa. Typically, the amount of the free-radical polymerization initiator is in the range of 1 to 20 mmol, in particular 2.5 to 7 mmol per 1 mol of monomers to be copolymerized. In case of redox initiators, these ranges refer to the oxidizing agent.

The copolymerisation of acrylic acid and the $C_1$-$C_3$ alkyl acrylate is usually conducted at temperatures in the range from 30 to 150°C. Temperatures employed are frequently in the range from 40 to 120°C, in particular in the range from 50 to 110°C and especially in the range from 60 to 100°C.

The copolymerisation of acrylic acid and the $C_1$-$C_3$ alkyl acrylate can be carried out at a pressure of less than, equal to or greater than 1 atm (atmospheric pressure), and so the polymerization temperature may exceed 100°C and may be up to 150°C. Polymerization of the monomers is normally performed at ambient pressure, but it may also be performed under elevated pressure. In this case, the pressure may assume values of 1.1 to 15 bar (absolute) or even higher values. Frequently, the free-radical polymerization of the invention is conducted at ambient pressure (about 1 atm) with exclusion of oxygen, for example under an inert gas atmosphere, for example under nitrogen or argon.

The copolymerisation of acrylic acid and the $C_1$-$C_3$ alkyl acrylate can be conducted e.g. by a batch or semi-batch procedure or by a continuous procedure. In the batch procedure, the monomers to be polymerized and optionally the solvent used in the polymerization procedure is charged to a reaction vessel, while the majority or the total amount of the polymerization initiator is added to the reaction vessel in the course of the polymerization reaction. In a semi batch procedure, at least a portion of the total amount of the free-radical polymerization initiator and solvent and optionally a small portion of the monomers are charged to the reaction vessel, and the majority of monomers to be polymerized are added to the reaction vessel in the course of the polymerization reaction. In a continuous process, the monomers and polymerization initiator and the solvent are continuously added to a reaction vessel, and the obtained copolymer is continuously discharged from the polymerization vessel. Preferably, the copolymerisation of acrylic acid and the $C_1$-$C_3$ alkyl acrylate is carried out as a semi-batch procedure. In particular, at least 90% of the monomers to be polymerized are added to the reaction vessel in the course of the polymerization reaction.

The copolymerisation of acrylic acid and the $C_1$-$C_3$ alkyl acrylate may also include a step where any residual monomers are removed, e.g. by physical means, such as distillation or by chemical means, i.e. by forced radical polymerization, e.g. by using a second free-radical polymerization initiator, which is added to the polymerization reaction after at least 90% of the monomers to be polymerized have been reacted. Preferably, the second free-radical polymerization initiator is an organic hydroperoxide, such as tert.-butyl hydroperoxide.

The copolymer can typically be isolated from the resulting polymerization mixture by means of relatively customary methods, e.g. by means of precipitation or distillation. However, it is also possible to use the solution of the copolymers as obtained by solution polymerization of acrylic acid and the $C_1$-$C_3$ alkyl acrylate, in particular, if the solvent is water or contains water. Frequently, the concentration of the copolymer in such solutions is in the range from 10 to 50 wt.-%, in particular in the range from 15 to 40 wt.-%.

The copolymers are used for reducing the formation of inorganic scale in water-bearing systems. Water-bearing systems prone to scale formation are in particular those which are in permanent or at least in longer lasting contact with water containing scale-forming components, especially if they are operated at conditions which enhance the risk of scale formation, such as higher temperature (water solubility of many scale-forming salts decreases at increasing temperature) and/or specific pH. Roughly speaking, water solubility of hydroxyl scale, such as $Zn(OH)_2$ or $Fe(OH)_3$, generally decreases at increasing pH values; however, under strong basic conditions, some hydroxides, e.g. $Zn(OH)_2$, become soluble again. Water solubility of magnesium silicate decreases at pH > 7, and is especially low at pH 8.5 to 10, and that of aluminium silicate is lowest between pH 4 and 10.

Non-exhaustive examples for water-bearing systems prone to scale formation are water steam circuits, such as present in power plants; cooling water systems, such as cooling circuits or cooling towers; membrane plants, such as seawater desalination units based on reverse osmosis; seawater desalination units based on other principles, such as thermal seawater desalination units using distillative methods; geothermal systems, e.g. geothermal power plants, such as dry steam power stations, flash steam power stations or binary cycle power stations, or geothermal heating units, e.g. geothermal district heating units; water injection wells, including those in oil wells; heat exchangers; waste water units, and also simpler systems containing tanks, boilers or pipe systems in which water is stored or transported, such as heating networks as present in simple buildings with local heating systems, in large building complexes, in district heating networks or in industrial utilities.

Different water-bearing system are potentially prone to the formation of different types of scale. This depends inter alia on the scale components present in the water of the water-bearing system. Calcium and magnesium ions are present in nearly any type of water used in common water-bearing systems, as are silicates or silicic acid from which silicates may form. Therefore, virtually every type of water-bearing system is prone to the formation of calcium-, magnesium- and/or silicate-containing scale. Zinc, by contrast, is present only in traces in natural water and is thus mainly a problem where it can enter the water-bearing system by another pathway. For instance, zinc is widely used as corrosion inhibitor in cooling water systems, and accordingly, the formation of zinc-containing scale is mainly a problem in such systems. Iron ions may be present in natural water used in usual water-bearing systems, but another important source is corrosion. Accordingly, water-bearing systems in which corrosion may occur are particularly prone to the formation of iron scale, especially in the form of Fe(III) hydroxide or oxide. These are especially cooling water systems and desalination units. Iron salts are moreover used as flocculation agents, e.g. in the pre-treatment of water, for example in reverse osmosis plants iron, thus forming another source of iron ions. Phosphate salts are frequently applied as corrosion inhibitors for carbon steel in drinking water nets and cooling systems or as a builder for cleaning solutions. Accordingly, phosphate scale can form in waste water plants, drinking water systems, especially in hot water pipes and cooling systems. The tendency of water to form phosphate scale increases with increasing pH.

In a specific embodiment, the copolymers are used for reducing the formation of inorganic scale in water steam circuits. In another specific embodiment, the copolymers are used for reducing the formation of inorganic scale in cooling water systems. In yet another embodiment, the copolymers are used for reducing the formation of inorganic scale in desalination units. In yet another specific embodiment, the copolymers are used for reducing the formation of inorganic scale in geothermal systems. In yet another specific embodiment, the copolymers are used for reducing the formation of inorganic scale in water injection wells. In yet another specific embodiment, the copolymers are used for reducing the formation of inorganic scale in heat exchangers. In yet another specific embodiment, the copolymers are used for reducing the formation of inorganic scale in waste water units.

In a preferred embodiment, the inorganic scale the formation of which is to be reduced or inhibited comprises at least one scale type which is difficult to treat with prior art anti-scaling agents. Thus, preferably, the use and method of the invention do not serve (exclusively) for reducing or inhibiting the formation of calcium carbonate, calcium sulfate or magnesium hydroxide. To be more precise, the inorganic scale comprises preferably at least one of the following scales: silicate-containing scale, hydroxide-containing inorganic scale (the hydroxide-containing inorganic scale being preferably other than magnesium hydroxide; this does however not preclude the additional presence of magnesium hydroxide), such as iron(III) hydroxide or zinc(II) hydroxide, and oxide-containing scale, such as iron(III) oxide. More preferably, the inorganic scale comprises at least one of the following scales: silicate-containing scale, iron(III) hydroxide, zinc(II) hydroxide and iron(III) oxide. In particular, the inorganic scale comprises at least one of the following scales: silicate-containing scale, iron(III) hydroxide and zinc(II) hydroxide. Specifically, the inorganic scale comprises preferably at least silicate-containing scale. The silicate-containing scale comprises preferably at least one polyvalent cation, such as $Mg^{2+}$, $Ca^{2+}$, $Al^{3+}$, $Fe^{2+}$ or $Fe^{3+}$, in particular $Mg^{2+}$, $Ca^{2+}$ and/or $Al^{3+}$, specifically $Mg^{2+}$ and/or $Al^{3+}$. Such $Mg^{2+}$ and/or $Al^{3+}$-containing silicate scale is termed in the following as magnesium silicate and/or aluminium silicate, whether or not the silicate is a silicate in the proper sense, i.e. is present as a salt of monomeric or polymeric (generally dimeric or trimeric) silicic acid and the counter cation, or is rather a co-precipitate of silica and a salt of this metal, e.g. a metal hydroxide or a carbonate, or a mixed form thereof.

The use according to the invention serves thus in particular for reducing or even inhibiting the formation of silicate-containing scale in water-bearing systems containing water-soluble silicates, in particular in water additionally containing at least one multi-valent cation such as magnesium, calcium, aluminium or iron cations, more particularly in water additionally containing at least one multi-valent cation such as magnesium, calcium and/or aluminium cations, and specifically containing magnesium and/or aluminium cations.

In another preferred embodiment, the inorganic scale the formation of which is to be reduced or inhibited comprises at least calcium phosphate.

The use according to the invention serves however also for reducing or even inhibiting the formation of typical scales, such as calcium carbonate or sulfate or magnesium hydroxide (preferably in addition to the reduction or inhibition of the difficult-to-treat scale types mentioned above).

The anti-scaling agents of the present invention are useful for treating water which contains a minimum amount of scale-forming components. In particular, the water in the water-bearing system contains at least one of the following scale-forming components in the following amounts:

- at least 1 ppm of water-soluble silicate, preferably at least 5 ppm of water-soluble silicate, more preferably at least 15 ppm of water-soluble silicate, and in particular at least 100 ppm of water-soluble silicate;
- at least 0.2 ppm of $Fe^{3+}$, preferably at least 2 ppm of $Fe^{3+}$, in particular at least 5 ppm of $Fe^{3+}$;
- at least 0.5 ppm of $Zn^{2+}$, preferably at least 2 ppm of $Zn^{2+}$, in particular at least 5 ppm of $Zn^{2+}$.

More particularly, the water in the water-bearing system contains at least one of the following scale-forming components in the following amounts:

- at least 1 ppm of water-soluble silicate and simultaneously at least one polyvalent cation such as $Mg^{2+}$, $Ca^{2+}$, $Al^{3+}$, $Fe^{2+}$ or $Fe^{3+}$ in an overall amount of at least 1 ppm, preferably at least 5 ppm of water-soluble silicate and simultaneously at least one polyvalent cation such as $Mg^{2+}$, $Ca^{2+}$, $Al^{3+}$, $Fe^{2+}$ or $Fe^{3+}$ in an overall amount of at least 1 ppm, more preferably at least 15 ppm of water-soluble silicate and simultaneously at least one polyvalent cation such as $Mg^{2+}$, $Ca^{2+}$, $Al^{3+}$, $Fe^{2+}$ or $Fe^{3+}$ in an overall amount of at least 5 ppm, and in particular at least 100 ppm of water-soluble silicate and simultaneously at least one polyvalent cation such as $Mg^{2+}$, $Ca^{2+}$, $Al^{3+}$, $Fe^{2+}$ or $Fe^{3+}$ in an overall amount of at least 5 ppm;
- at least 0.2 ppm of $Fe^{3+}$, preferably at least 2 ppm of $Fe^{3+}$, in particular at least 5 ppm of $Fe^{3+}$;
- at least 0.5 ppm of $Zn^{2+}$, preferably at least 2 ppm of $Zn^{2+}$, in particular at least 5 ppm of $Zn^{2+}$.

$Fe^{3+}$ and $Zn^{2+}$ are mainly a problem in the form of their hydroxides. The solubility of the hydroxides is pH-dependent, generally decreasing with increasing pH. Also the solubility of silicates is pH dependent, especially if the water to be treated contains polyvalent cations such as $Mg^{2+}$, $Ca^{2+}$, $Al^{3+}$, $Fe^{2+}$ or $Fe^{3+}$, and also generally decreasing with increasing pH. Accordingly, the anti-scaling agents of the present invention are particularly useful for treating water containing at least one of $Fe^{3+}$ and $Zn^{2+}$ and/or containing silicate (and, in particular, simultaneously also $Mg^{2+}$, $Ca^{2+}$, $Al^{3+}$, $Fe^{2+}$ and/or $Fe^{3+}$), and having simultaneously a pH of at least 4 (e.g. 4 to 12 or 4 to 10), preferably of at least 5 (e.g. 5 to 12 or 5 to 10), more preferably of at least 6 (e.g. 6 to 12 or 6 to 10), in particular of at least 7 (e.g. 7 to 12 or 7 to 10), more particularly of at least 7.5 (e.g. 7.5 to 12 or 7.5 to 10), and specifically of at least 8 (e.g. 8 to 12 or 8 to 10), as determined at 22°C. To cause or increase scale formation, it is sufficient that the water has the above pH only temporarily and not necessarily throughout the whole duration of storage, transport or processing.

The anti-scaling agents of the present invention are particularly useful for treating water which contains:

- at least 1 ppm of water-soluble silicate and simultaneously at least one polyvalent cation selected from $Mg^{2+}$, $Ca^{2+}$, $Fe^{2+}$ and $Fe^{3+}$ in an overall amount of at least 1 ppm; preferably at least 5 ppm of water-soluble silicate and simultaneously at least one polyvalent cation selected from $Mg^{2+}$, $Ca^{2+}$, $Fe^{2}$ and $Fe^{3+}$ in an overall amount of at least 1 ppm; more preferably at least 15 ppm of water-soluble silicate and simultaneously at least one polyvalent cation selected from $Mg^{2+}$, $Ca^{2+}$, $Fe^{2+}$ and $Fe^{3+}$ in an overall amount of at least 5 ppm; and in particular at least 100 ppm of silicate and simultaneously at least one polyvalent cation selected from $Mg^{2+}$, $Ca^{2+}$, $Fe^{2+}$ and $Fe^{3+}$ in an overall amount of at least 5 ppm;

and simultaneously:

- the water has at least temporarily a pH value of at least 6, e.g. in the range of from 6 to 12 or specifically from 6 to 10; preferably of at least 7, e.g. in the range of from 7 to 12 or specifically from 7 to 10; in particular of at least 7.5, e.g. in the range of from 7.5 to 12 or specifically from 7.5 to 10; and specifically of at least 8, e.g. in the range of from 8 to 12 or specifically from 8 to 10, as determined at 22°C.

The anti-scaling agents of the present invention are also particularly useful for treating water which additionally or alternatively contains:

- at least 1 ppm of water-soluble silicate and simultaneously $Al^{3+}$ in an amount of at least 1 ppm; preferably at least 5 ppm of water-soluble silicate and simultaneously $Al^{3+}$ in an amount of at least 1 ppm, more preferably at least 15 ppm of water-soluble silicate and simultaneously $Al^{3+}$ in an amount of at least 5 ppm; and in particular at least 100 ppm of water-soluble silicate and simultaneously $Al^{3+}$ in an amount of at least 5 ppm;

and simultaneously:

- the water has at least temporarily a pH value of at least 4, e.g. in the range of from 4 to 12 or specifically from 4 to 10; preferably of at least 5, e.g. in the range of from 5 to 12 or specifically from 5 to 10; more preferably of at least 6, e.g. in the range of from 6 to 12 or specifically from 6 to 10; in particular of at least 7, e.g. in the range of from 7 to 12 or specifically from 7 to 10; more particularly of at least 7.5, e.g. in the range of from 7.5 to 12 or specifically from 7.5 to 10; and specifically of at least 8, e.g. in the range of from 8 to 12 or specifically from 8 to 10, as determined at 22°C.

The anti-scaling agents of the present invention are also particularly useful for treating water which additionally or alternatively contains at least one of the following scale-forming component in the following amount:

- at least 0.2 ppm of $Fe^{3+}$, preferably at least 2 ppm of $Fe^{3+}$, in particular at least 5 ppm of $Fe^{3+}$; and/or
- at least 0.5 ppm of $Zn^{2+}$, preferably at least 2 ppm of $Zn^{2+}$, in particular at least 5 ppm of $Zn^{2+}$,

and simultaneously:

- the water has at least temporarily a pH value of at least 6, e.g. in the range of from 6 to 12 or specifically from 6 to 10; preferably of at least 7.5, e.g. in the range of from 7.5 to 12 or specifically from 7.5 to 10; and in particular of at least 8, e.g. in the range of from 8 to 12 or specifically from 8 to 10, as determined at 22°C.

The anti-scaling agents of the present invention are useful for treating water over the whole technically interesting temperature range, such as 0 to 570°C or 10 to 300°C or 20 to 200°C or 20 to 150°C or 20 to 100°C.

For effectively reducing or inhibiting the formation of scale, the copolymer will be usually added to the water to be treated in such amounts that a concentration of the copolymer of at least 0.005 $g/m^3$, preferably at least 0.01 $g/m^3$, preferably at least 0.03 $g/m^3$, in particular at least 0.1 $g/m^3$, specifically at least 1 $g/m^3$, e.g. in the range from 0.005 to 500 $g/m^3$ or preferably in the range from 0.01 to 300 $g/m^3$ or more preferably in the range from 0.03 to 250 $g/m^3$ or in particular in the range from 0.1 to 250 $g/m^3$ or specifically in the range from 1 to 250 $g/m^3$ or very specifically in the range of 4 to 200 $g/m^3$, results.

The copolymers as defined herein are compatible with anti-scaling agents which are commonly used for reducing or inhibiting the formation of scale, in particular in water steam circuit units. Therefore, the copolymers as defined herein can be used in combination with a further anti-scaling agent, in particular with a scale dispersant, i.e. anti-scaling agents which assist in dispersing insoluble inorganic material which may form in the water-bearing systems. Suitable anti-scaling agents which can be used in combination with the present copolymers can be both polymeric or phosponate-based anti-scalants/dispersants. The present copolymers can be combined with further additives, such as those commonly used for water treatment, e.g. biocides, biodispersants, defoamers, antifoamers and chelants.

Examples for phosphonate-based antiscalants are amino tris(methylenephosphonic acid) (ATMP), hydroxyethylidene 1,1-diphosphonic acid (HEDP), 2-phosphonobutane-1,2,4 tricarboxylic acid (PBTC), hexamethylenediaminetetra(methylenephosphonic acid) (HDTMP) and diethylenetriamine penta(methylene phosphonic acid) (DTPMP).

Biocides are generally categorized as oxidizing and non-oxidizing biocides. Example for oxidizing biocides are chlorine, bromine, iodine, chlorine dioxide, ozone, and hydrogen peroxide. Example for non-oxidizing biocides are acrolein, polyquaternary amines, 2,2 dibromo-3-nitrilopropionamide (DBNPA), isothiazoline, chlorinated phenolics, copper salts and organo-sulphur compounds.

Biocides are mostly used along with a biodispersant agent. Some examples therefor include DTEA II (2-decylthio ethanamine), DMAD (fatty acid amide), dodecylamine acetate, polyquaternary amines, dioctylsulfosuccinate (DOSS), polyoxyalkylenes and enzymes.

Examples to defoamers and antifoamers agents are insoluble oils, polydimethylsiloxanes and other silicones, certain alcohols, stearates and glycols.

Most commonly used chelating agents are ethylenediaminetetraacetic acid (EDTA), nitriliacetic acid (NTA), hydroxyethlenediaminetriacetic (HEDTA), diethylenetriaminepentaacetic acid (DTPA), citric acid and oxoic acids.

The use of the copolymers of the present invention may also be combined with conventional mechanical cleaning, such as sponge ball cleaning.

The invention is now illustrated by the following examples.

## Examples

Abbreviations:

AA: acrylic acid
b.w.: by weight
DI-water: Deionized water
EA: ethyl acrylate
GPC: gel permeation chromatography
LSI: Langlier saturation index
$M_w$: weight average molecular weight
$M_n$: number average molecular weight
NaBS: Sodium bisulfite ($NaHSO_3$)
NaPS: Sodium persulfate ($Na_2S_2O_8$)
PP: polypropylene
PTFE: poly(tetrafluoroethene)
rpm: rotations per minute
TAC ($K_{S4,3}$): Total acid capacity ($K_{S4,3}$-value)

Polymer Analytics:

1) GPC

GPC was performed by using an Agilent 1200er Series equipped with a PSS Security Degasser and a column oven adjusted to 35°C and a detection system measuring the refractive index. Columns used (in the direction of flow):

1. PSS Suprema Guard Column
2. PSS Suprema 3000 Å
3. PSS Suprema 100 Å

Flow rate was 1 ml/min.

As an eluent, ultrapure Water (Merck Millipore) which supplemented with 0.1 M $NaNO_3$ and 0.01 M $NaH_2PO_4/Na_2HPO_4$ buffer to adjust pH 7 was used. Prior to use, the eluent was filtered over a 0.45 $\mu$m cellulose acetate filter membrane.

Polymer samples were diluted in a ratio of 1/10 with deionized water and adjusted to pH 7 by addition of 10% sodium hydroxide solution.

Samples were diluted with the eluent containing the internal standard ethylene glycol to reach a polymer concentration of 3-5g/liter. The samples were filtered with 0.45 $\mu$m cellulose acetate (or hydrophilized PTFE) syringe filters prior to measurement.

For calibration narrowly dispersed poly(acrylic acid) sodium salt standards of PSS (Polymer Standard Service GmbH Germany) with the following peak molecular weights in Dalton were used:

1. 1250
2. 1770
3. 2925
4. 7500
5. 16000
6. 28000
7. 62900
8. 82900
9. 193800
10. 467300

(All molecular weights refer to the sodium salt of polyacrylic acid.)

For calibration purposes, the GPC curves of the narrowly dispersed standard were analysed with regard to the retention volume of their refractive index intensity peak using the Win GPC UniChrom software from PSS (Polymer Standard Service GmbH Germany). A calibration correlation curve was created by means of polynomial fit (Polynomial 3).

2) Viscosity

The viscosity of the polymer solutions was measured at 20°C $\pm$ 0.5°C by using a Brookfield digital viscosimeter (Brookfield Engineering Laboratories, Inc.) with spindle 61 at a rotational speed of 60 rpm.

3) pH measurement

pH was determined by direct measurement at 20°C $\pm$ 0.5°C using a Mettler Toledo In lab routine pH electrode connected to a WTW 3210 pH meter (WTW Germany) calibrated by WTW buffer solutions.

Preparation examples:

The following polymerization reactions were carried out in a 1000 ml double jacket glass reactor connected to heating bath circulation thermostat, equipped with a 1.4751 stainless steel stirrer, a condenser connected to a bubble counter outlet, fitted with a thermocouple and two additional necks for charging and dosing liquids. Except for the outlet of the condenser, the reactor is sealed gas tight.

Preparation Example 1 (Polymer no. 6):

A mixture of water 300.0 g) and 10% b.w. sulfuric acid (0.3 g) was added to the reactor and heated to 70°C with stirring.

The initiator mixtures were prepared, charged into disposable PP syringes equipped with PTFE tubes (1 mm inner diameter) and mounted to syringe pumps:

1. Syringe 1: An aqueous 40% b.w. solution of sodium bisulfite (51.9 g),
2. Syringe 2: A solution sodium persulfate (2.4 g) in water (24.3 g).

A mixture of acrylic acid (244.4 g) and ethyl acrylate (59.9 g) was charged into a glass cylinder connected to a double piston pump.

Once the internal temperature of the reactor reached at least 65°C, about 5% of the aqueous sodium bisulfite solution (about 2.4 g) was charged to the reactor. The reactor temperature was set to automatic control with a target temperature of 70°C. Feeds of monomer and initiator solutions (Syringes 1 and 2) were started simultaneously within 4 minutes from this point at the respective feed rates. The feeds were dropped through separate dozing nozzles.

The feed/dosing times of the separate solutions were

· 40% b.w. aqueous solution of sodium bisulfite: 165 minutes
· sodium persulfate in water: 195 minutes
· monomer mixture: 180 minutes

10 minutes after the end of the last feed (sodium persulfate solution), a chaser solution of 70% b.w. tert. butyl hydroperoxide (1.0 g) in water (4 g) was gradually added by means of a syringe pump within 20 minutes, while cooling to 60°C to reduce potential residual monomer. 10 minutes after the end of the addition of the chaser solution, the polymerization mixture was cooled to 50°C. Then water was added (160 g). After the internal temperature of the reactor had dropped below 50°C, 50% b.w. aqueous NaOH (63.8 g) was added with a funnel while keeping the temperature below 55°C.

Remaining NaOH in the funnel was flushed with water (15.0 g) into the reactor. Residual bisulfite/$SO_2$ was determined iodometrically and converted by oxidation with an equimolar amount of hydrogen peroxide 30% (3.23 g), and the product was further cooled to <40°C. Water was added to adjust the solution to a total mass of 1000 g.

The resulting polymer solution had the following properties:

pH: 4.12 (20°C)
Viscosity (Brookfield): 70 mPas
$M_w$: 6300 [g/mol]
$M_n$: 1540 [g/mol]

$M_w$ and $M_n$ were determined at pH 7 via GPC using poly(sodium acrylate) standards. The values relate to the polymers in form of their sodium salts.

Preparation of polymers 1 to 5 and 7 to 10 and of comparative polymers C.1 to C.8

The polymers 1 to 5 and 7 to 10 as well as comparative polymers C.1 to C.8 were prepared by analogy to the protocol of preparation example 1. The amounts of monomers and initiators are summarized in the following table 1. The properties of the resulting polymer solutions are summarized in table 2.

[Table 1]

Table 1:

| Prep. Ex. # | AA [g] | EA [g] | EA [%] [1] | NaBS [g] [2] | NaPS [g] | NaOH (50%) [g] |
|---|---|---|---|---|---|---|
| 1 | 283.6 | 20.74 | 5.0 | 53.9 | 2.5 | 67.8 |
| 2 | 263.6 | 40.7 | 10 | 42.3 | 1.9 | 65.0 |
| 3 | 263.6 | 40.7 | 10 | 52.8 | 2.4 | 66.5 |
| 4 | 244.4 | 59.9 | 15 | 43.5 | 2.2 | 65.2 |
| 5 | 244.4 | 59.9 | 15 | 41.5 | 1.9 | 63.8 |
| 6 | 244.4 | 59.9 | 15 | 51.9 | 2.4 | 63.8 |
| 7 | 225.9 | 78.4 | 20 | 40.8 | 1.9 | 62.7 |
| 8 | 225.9 | 78.4 | 20 | 49.0 | 2.3 | 64.1 |
| 9 | 225.9 | 78.4 | 20 | 52.0 | 2.3 | 64.1 |
| 10 | 208.0 | 96.3 | 25 | 50.1 | 2.3 | 61.6 |

(continued)

| Prep. Ex. # | AA [g] | EA [g] | EA [%] [1] | NaBS [g] [2] | NaPS [g] | NaOH (50%) [g] |
|---|---|---|---|---|---|---|
| C1 | 284.2 | 20.1 | 5 | 142.6 | 3.1 | 67.8 |
| C2 | 408.64 | 28.8 | 4.8 | 205.3 | 4.5 | 97.5 |
| C3 | 263.6 | 40.7 | 10 | 105.7 | 4.8 | 66.5 |
| C4 | 263.6 | 40.7 | 10 | 210.4 | 4.8 | 66.5 |
| C5 | 263.6 | 40.7 | 10 | 70.5 | 3.2 | 65.0 |
| C6 | 244.4 | 59.9 | 15 | 69.11 | 3.64 | 65.2 |
| C7 | 225.9 | 88.4 | 20 | 101.9 | 4.7 | 64.1 |
| C8 | 225.9 | 78.4 | 20 | 203.8 | 4.7 | 64.1 |
| 1) % b.w. of EA, based on total amount of monomers | | | | | | |
| 2) Amount of 40% b.w. aqueous solution of NaBS | | | | | | |

[Table 2]

Table 2:

| Prep. Ex. # | AA [mol-%] | EA [mol-%] | Visc. [mPas] | $M_w$ | $M_n$ |
|---|---|---|---|---|---|
| 1 | 95 | 5 | 82 | 7350 | 2150 |
| 2 | 90 | 10 | 104 | 9100 | 2330 |
| 3 | 90 | 10 | 75 | 7360 | 2100 |
| 4 | 85 | 15 | 129 | 10900 | 2900 |
| 5 | 85 | 15 | 98 | 9400 | 2300 |
| 6 | 85 | 15 | 70 | 6300 | 1540 |
| 7 | 80 | 20 | 106 | 10600 | 2300 |
| 8 | 80 | 20 | 78 | 7400 | 2000 |
| 9 | 80 | 20 | 63 | 5900 | 1400 |
| 10 | 75 | 25 | 79 | 7300 | 2100 |
| C1 | 95 | 5 | 35 | 2060 | 670 |
| C2 | 95 | 5 | 550 | 1800 | 610 |
| C3 | 90 | 10 | 35 | 2600 | 830 |
| C4 | 90 | 10 | 24.5 | 1040 | 380 |
| C5 | 90 | 10 | 38 | 4080 | 1060 |
| C6 | 85 | 15 | 57 | 4830 | 1240 |
| C7 | 80 | 20 | 37 | 2650 | 800 |
| C8 | 80 | 20 | 24 | 1030 | 370 |

Application tests:

In order to ensure simple comparability of polymer efficacy tests, all polymer solutions were prepared to contain the same concentration of polymer of 30.4% w/w, where the weight of the polymer relates to its acid form.

1) Stabilization of silicate in aqueous solution

1a) Preparation of stock solutions of inhibitors and scale-forming silicate salts

Following sources for silicate scale-forming components were used:

Source of magnesium ions: Magnesium chloride / $MgCl_2 \cdot 6H_2O$
Source of aluminium ions: Aluminium chloride / $AlCl_3 \cdot 6H_2O$
Source of silicic acid: Sodium metasilicate pentahydrate / $Na_2O_3Si \cdot 5H_2O$

10000 ppm stock solutions of all metals and inhibitors (anti-scalants) were created by dissolution of the reagents in deionized water and mild stirring (except for sodium metasilicate pentahydrate, which was diluted to a 500 ppm stock). In order to create the desired silicate scale test solution, the calculated portion of the metal source was mixed with deionized water and the calculated amount of the desired anti-scalant, and pH was approximately set to the desired value. Then silicic acid portion was added and the pH was recalculated, this time with great accuracy. The final test volume was 25 ml. The experiment was to stand at room temperature and periodically a 3 ml sample was removed, filtrated and used in the determination method that is described below.

In detail, the preparation of magnesium silicate and aluminium silicate / polymer stock solutions was carried out as follows:

Magnesium silicate

Magnesium and silicic acid containing test water was prepared in a PET container to result in a final volume of 25 mL with a concentration of 200 ppm of $Mg^{2+}$ and 200 ppm of silicic acid (as $SiO_2$). First, the Mg solution ($MgCl_2 \cdot 6H_2O$) was mixed with the inhibitor in the desired concentration (100 or 200 ppm as free acid) under mild stirring and the pH was pre-adjusted below 9.5. Then sodium metasilicate pentahydrate ($Na_2O_3Si \cdot 5H_2O$) was added to the solution and the pH was set to 10.0. For comparison, a blank sample was prepared as described above, however without the addition of inhibitor. The PET containers were covered using laboratory film and set aside under static conditions for 3 hours. In order to determine the silicate stabilization at the end of the 3rd hour, a 2 ml sample was removed and used in the molybdenum yellow analysis method described below for determining the content of soluble silicic acid. The results of the molybdenum yellow analysis method were compared with blank values and the stabilization was calculated as % based on equation 1:
**Formula 1**

$$Stabilization\ MgSiO_2\ [\%] = \frac{(SiO_2)_{measured} - (SiO_2)_{blank}}{(SiO_2)_{initial} - (SiO_2)_{blank}} * 100 \qquad \text{eq. 1}$$

During the trials pH was adjusted using HCl or NaOH.

Aluminium silicate

Aluminium and silicic acid containing test water was prepared in PET container to result in a final volume of 25 mL with a concentration of 150 ppm of $Al^{3+}$ and 150 ppm of silicic acid (as $SiO_2$). First, the Al solution ($AlCl_3 \cdot 6H_2O$) was mixed with the inhibitor in the desired concentration (150 ppm as free acid) under mild stirring and the pH was pre adjusted below 9.5. Then sodium metasilicate pentahydrate ($Na_2O_3Si \cdot 5H_2O$) was added to the solution and pH was set to 7.0. For comparison, a blank sample was prepared as described above, however without the addition of inhibitor. The PET containers were covered using laboratory film and set aside under static conditions for 3 hours. In order to determine the silicate stabilization at the end of the 3rd hour, a 2 ml sample was removed, filtered and used in the molybdenum yellow analysis method described below for determining the content of soluble silicic acid. The results of the molybdenum yellow analysis method were compared with blank values and the stabilization was calculated as % based on the on equation 2:
**Formula 2**

$$Stabilization\ AlSiO_2\ [\%] = \frac{(SiO_2)_{measured} - (SiO_2)_{blank}}{(SiO_2)_{initial} - (SiO_2)_{blank}} * 100 \qquad \text{eq. 2}$$

During the trials pH was adjusted using HCl or NaOH.

1b) Test for stabilization of silicate in aqueous solution -molybdenum yellow analysis

The "molybdenum yellow analysis" is a spectrophotometric detection test for the determination of molybdate-reactive silica. The method is based on the principle that ammonium molybdate reacts only with "reactive" silica (silicic acid).

A quantity of 2 mL aliquot from the working solution was filtered through a 0.45 $\mu$m syringe filter, and then diluted to 25 mL in a special cylindrical cell (Hach Co.) of 1 cm path length. Then, 1 mL of ammonium molybdate stock solution (10 g of ammonium molybdate dissolved in 100ml of water; pH adjusted to 7.7-7.8 with NaOH) and 0.5 mL HCl (ca. 18%) were added to the sample cell, the solution was mixed well by shaking and finally left undisturbed for 10 min. After that, 1 mL of oxalic acid stock solution (8.75 g of oxalic acid dissolved in 100 ml of water) was added and thoroughly mixed again. The solution was set aside for 2 min and absorbance was measured at 420 ppm. The recorded value is expressed as "ppm $SiO_2$". In order to calculate the concentration in the working solution, an appropriate dilution factor is applied. After the second time period, the photometer was set to "zero absorbance" using a sample of water plus all chemicals used for the silicomolybdate test except for silicic acid ("blank"). Oxalic acid was added to destroy the molybdophosphoric acid (in case phosphate is present in the water) leaving the silicomolybdate complex intact, and thus eliminating any colour interference from phosphates.

Molybdate reacts with the monomeric, dimeric, and possibly trimeric forms as stated above.

The results are compiled in tables 3 and 4.

[Table 3]

Table 3

| Polymer No. | EA [mol-%] | $M_w$ [g/mol] | Al-$SiO_2$ [150 ppm] stabilization [%] |
|---|---|---|---|
| 1 | 5 | 7350 | 71.2 |
| C2 | 5 | 1800 | 10.0 |
| 6 | 15 | 6300 | 77.0 |
| C6 | 15 | 4830 | 24.3 |
| Al-$SiO_2$ = aluminium silicate | | | |

[Table 4]

Table 4

| Polymer No. | EA [mol-%] | $M_w$ [g/mol] | Mg-$SiO_2$ [100 ppm] stabilization [%] | Mg-$SiO_2$ [200 ppm] stabilization [%] |
|---|---|---|---|---|
| 4 | 15 | 10900 | 48.8 | 64.0 |
| C6 | 15 | 4830 | 28.8 | 38.0 |
| 7 | 20 | 10600 | 41.0 | 44.0 |
| C7 | 20 | 2650 | 19.4 | 31.0 |
| 10 | 25 | 7300 | 43.8 | 55.0 |
| Mg-$SiO_2$ = magnesium silicate | | | | |

As the results show, the copolymers of the present invention have a superior stabilization effect as compared to analogous copolymers having however a lower molecular weight.

2) Stabilization of Zn(OH)$_2$ in aqueous solution

Zinc containing test water of the composition given in table 5 was prepared by mixing deionized water with the below salts.

Following sources for the ionic components of the test water were used:

Source of calcium ions: $CaCl_2 \cdot 2H_2O$
Source of magnesium ions: $MgSO_4 \cdot 7H_2O$
Source of hydrogencarbonate ions: $NaHCO_3$
Source of chloride ions: $CaCl_2 \cdot 2H_2O$ and $ZnCl_2$
Source of sulfate ions: $MgSO_4 \cdot 7H_2O$
Source of sodium ions: $NaHCO_3$
Source of zinc ions: $ZnCl_2$ (in 1% PBTC (2-phosphonobutane-1,2,4,-tricarboxylic acid) solution)

[Table 5]

Table 5

| Ion | Concentration [ppm] |
|---|---|
| $Ca^{2+}$ | 79.5 |
| $Mg^{2+}$ | 15.0 |
| $Na^+$ | 50.2 |
| $HCO_3^-$ | 133.1 |
| $Cl^-$ | 145.0 |
| $SO_4^{2-}$ | 59.1 |
| $Zn^{2+}$ | 3.5 |

250 ml of the prepared solution were filled into a bottle and mixed with the inhibitors to be tested in a concentration of 20 ppm and adjusted to pH 8.5 (0.1 M NaOH or 0.1 M HCl). For comparison, a blank sample and a control sample were prepared as described above, however without the addition of inhibitor (the control solution is required to determine the initial $Zn^{2+}$ concentration). Blank and inhibitor containing solutions were stored in a drying oven at 70°C and stirred at 300 rpm for 24 h. After 24 h, the solution was cooled to room temperature, filtrated (pore size: 0.45 $\mu$m) and acidified with 1 mL of ~15% HCl. The control solution was acidified with 1 mL of ~15% HCl and stored at room temperature for 24 h without stirring.

The remaining amount of zinc in the filtrate was then determined with flame AAS (atomic absorption spectroscopy) (Thermo Scientific, iCE 3000 Series, based on the DIN 38406-32 method). The stabilization was calculated as % based on equation 3:

**Formula 3**

$$Stabilization\ [\%] = \frac{(Zn^{2+}sample) - (Zn^{2+}blank) * 100\,\%}{(Zn^{2+}control\ value) - (Zn^{2+}blank)}$$

eq. 3

The results are compiled in table 6.

[Table 6]

Table 6

| Polymer No. | EA [mol-%] | $M_w$ [g/mol] | $Zn(OH)_2$ stabilization [%] |
|---|---|---|---|
| 3 | 10 | 7360 | 71.4 |
| C4 | 10 | 1040 | 2.0 |
| 5 | 15 | 9400 | 78.5 |

(continued)

| Polymer No. | EA [mol-%] | $M_w$ [g/mol] | $Zn(OH)_2$ stabilization [%] |
|---|---|---|---|
| 6 | 15 | 6300 | 89,2 |
| 7 | 20 | 10600 | 79.6 |
| 8 | 20 | 7400 | 88.4 |
| 9 | 20 | 5900 | 90.6 |
| C8 | 20 | 1030 | 1.9 |
| 10 | 25 | 7300 | 91.3 |

As the results show, the copolymers of the present invention have a superior stabilization effect as compared to analogous copolymers having however a lower molecular weight.

3) Stabilization of $Fe(OH)_3$ in aqueous solution

Iron containing test water of the composition given in table 7 was prepared by mixing deionized water with the below salts.

Following sources for the ionic components of the test water were used:

Source of calcium ions: $CaCl_2 \cdot 2H_2O$
Source of magnesium ions: $MgSO_4 \cdot 7H_2O$
Source of hydrogencarbonate ions: $NaHCO_3$
Source of chloride ions: $CaCl_2 \cdot 2H_2O$ and $FeCl_3 \cdot 6H_2O$
Source of sulfate ions: $MgSO_4 \cdot 7H_2O$
Source of sodium ions: $NaHCO_3$
Source of ferric ions: $FeCl_3 \cdot 6H_2O$

[Table 7]

Table 7

| Ion | Concentration [ppm] |
|---|---|
| $Ca^{2+}$ | 100.2 |
| $Mg^{2+}$ | 24.3 |
| $Na^+$ | 259.8 |
| $HCO_3^-$ | 305.8 |
| $Cl^-$ | 196.44 |
| $SO_4^{2-}$ | 96.1 |
| $Fe^{3+}$ | 10 |

500 mL of the prepared solution were filled into a bottle and mixed with the inhibitors to be tested in various concentrations and adjusted to pH 8.8 (1 M NaOH or 0.5 M $H_2SO_4$). In the solution preparation it is important to follow the order of addition of the additives. Initially the required amount of inhibitor is added to deionized water, then sodium hydrogen carbonate, calcium chloride, magnesium sulfate and ferric chloride are added and the pH is adjusted. All mixing steps are completed under stirring. For comparison, a blank sample was prepared as described above, however without the addition of inhibitor. From each prepared bottle 10 mL were removed prior to introduction into water batch to be used for the initial ferric ion concentration determination. The remaining test solutions remained sealed over 20 hours in a water bath at 30°C under static conditions. At the end of 20 h, samples were removed from the water bath and 10 mL of the supernatant was extracted from each sample. To all samples 400 μl of HCl (32 %) was added and each bottle was heated in water bath at 100°C for 1 h. Afterwards all samples were cooled down and filled up with deionized water to give a total volume of 40ml. Then analyses were run with ICP-OES (Inductively Coupled Plasma - Atomic Emisson Spectrometry) (Shimadzu ICPE 9000).

The percentage of remaining iron (keeping rate of ferric ion) for each test solution was calculated according to the below equation. This calculation yields the keeping rate at single inhibitor concertation. To understand the effect of the inhibitor concentration on stabilization, efficiency tests were performed at multiple inhibitor concentrations of 4, 5, 6, 7, 8, 9, 10 and 12 ppm. From that average relative scale inhibition was calculated (equation 4). For the % average relative scale inhibition (ARSI) the keeping rates of ferric ion $Fe_k$ from 4 -12 ppm inhibitor concentrations were summed up and divided by the number of $Fe_k$ (equation 5).

Formula 4

$$Fe_k = \frac{c(Fe)_f}{c(Fe)_i} * 100\%$$

eq. 4

$Fe_k$ = keeping rate of ferric ion as %
$c(Fe)_f$ = final concentration of ferric ion as mg/l
$c(Fe)_i$ = initial concentration of ferric ion as mg/l

Formula 5

$$ARSI = \sum_{i=n}^{n} Fe_k /n$$

eq.5

The results are compiled in table 8.

[Table 8]

Table 8

| Polymer No. | EA [mol-%] | $M_w$ [g/mol] | $Fe(OH)_3$ stabilization [%] |
|---|---|---|---|
| 1 | 5 | 7350 | 50.6 |
| C1 | 5 | 2060 | 26.4 |
| C2 | 4.8 | 1800 | 2.8 |
| 2 | 10 | 9100 | 77.0 |
| 3 | 10 | 7360 | 60.0 |
| C3 | 10 | 2600 | 39.3 |
| C4 | 10 | 1040 | 4.1 |
| 5 | 15 | 9400 | 64.5 |
| 6 | 15 | 6300 | 64.2 |
| 8 | 20 | 7400 | 72.9 |
| 9 | 20 | 5900 | 73.4 |
| C8 | 20 | 1030 | 4.3 |
| 10 | 25 | 7300 | 75.8 |

As the results show, the copolymers of the present invention have a superior stabilization effect as compared to analogous copolymers having however a lower molecular weight.

4) Stabilization of $Ca_3(PO_4)_2$ in aqueous solutions

Phosphate containing test water of the composition given in table 9 was prepared by mixing deionized water with the below salts.

Following sources for the ionic components of the test water were used:

Source of calcium ions: $CaCl_2 \cdot 2H_2O$
Source of hydrogencarbonate ions: $NaHCO_3$
Source of chloride ions: $CaCl_2 \cdot 2H_2O$
Source of phosphate ions: $H_3PO_4$ (0.2% in deionized water)
Source of sodium ions: $NaHCO_3$

[Table 9]

Table 9

| Ion | Concentration [ppm] |
|---|---|
| $Ca^{2+}$ | 320.6 |
| $Na^+$ | 160.1 |
| $HCO_3^-$ | 424.9 |
| $Cl^-$ | 567.2 |
| $PO_4^{3-}$ | 10 |

250 ml of the prepared solution were filled into a bottle and mixed with the inhibitors to be tested in a concentration of 40 ppm and adjusted to pH 7.5 (0.1 M NaOH or 0.1 M HCl). For comparison, a blank sample and a control sample were prepared as described above, however without the addition of inhibitor (the control solution is required to determine the initial phosphate concentration). Blank and inhibitor containing solutions were stored in a drying oven at 70°C for 20h. After 20 h, the solution was cooled to room temperature, filtrated (pore size: 0.45 $\mu$m) and are acidified with 1 mL of ~15% HCl. The control solution was acidified with 1 mL of ~15% HCl and stored at room temperature for 20 h.

The remaining amount of ortho-phosphate in the filtrate was then determined with a Ganimed phosphate analyser (Ganimed P from Hach; photometric method based on DIN 1189 of 12'96). The stabilization was calculated as % based on equation 6:

**Formula 6**

$$Stabilization\ [\%] = \frac{(PO_4^{3-} sample) - (PO_4^{3-} blank) * 100\%}{(PO_4^{3-} control\ value) - (PO_4^{3-} blank)} \qquad \text{eq.6}$$

The results are compiled in table 10.

[Table 10]

Table 10

| Polymer No. | EA [mol-%] | $M_w$ [g/mol] | $Ca_3(PO_4)_2$ stabilization [%] |
|---|---|---|---|
| 6 | 15 | 6300 | 82.2 |
| 9 | 20 | 5900 | 81.3 |

(continued)

| Polymer No. | EA [mol-%] | $M_w$ [g/mol] | $Ca_3(PO_4)_2$ stabilization [%] |
|---|---|---|---|
| C7 | 20 | 2650 | 22.8 |
| 10 | 25 | 7300 | 79.7 |

As the results show, the copolymers of the present invention have a superior stabilization effect as compared to analogous copolymers having however a lower molecular weight.

5) Stabilization of $CaCO_3$ in aqueous solutions

To show that the copolymers according to the present invention also work as scale inhibitors for $CaCO_3$ as the most common scale type, some representative polymers were tested and compared to prior art scale inhibitors.

Evaluation of dynamic calcium carbonate scale inhibition was conducted in a test apparatus which comprises a beaker for test water, which is connected to a hose pump, a vertically mounted, thermostated glass cooler with a helical internal glass tube and a cooling jacket (Fa. Normag; Art.-Nr.: GSG 01069 02, 16 loops), where the helical tube is connected via the bottom inlet to the hose pump (2) and via its upper outlet to a measuring cylinder. A test solution of the composition according to Table 11 was prepared. First $CaCl_2 \cdot 2H_2O$ and $MgSO_4 \cdot 7H_2O$ were mixed, then the inhibitor in a concentration of 4 ppm was added, and sodium hydrogen carbonate solution was introduced as last. 1 l of the test solution was pumped over a 2 h period at a constant flow rate of 0.5 L/h through a helical glass tube heated by water of 80°C. Then the water left in the cooler was pumped back with a reduced flow rate to avoid removal of loose precipitate. The exact amount of collected water was determined with a measuring cylinder. $CaCO_3$ precipitated on the glass surface was dissolved with 16 % HCl and flushed into a 100 mL measuring flask. To remove hydrochloric acid residues, the glass cooler was flushed with 70 mL of deionized water which was collected in the same measuring flask. Deionized water was added to this flask to obtain a total volume of 100 mL. 10 mL of the solution were pipetted in an Erlenmeyer flask for titration which was then filled-up with 70 mL of deionized water. This solution was mixed with 5 mL of 50 % KOH and then titrated with an EDTA complexation solution using the indicator Calcon carboxylic acid.

Comparison against a blind sample provided the relative calcium carbonate inhibition of the tested compound.

Following sources for the ionic components of the test water were used:

Source of calcium and chloride ions: $CaCl_2 \cdot 2H_2O$
Source of magnesium and sulphate ions: $MgSO_4 \cdot 7H_2O$
Source of sodium and hydrogencarbonate ions: $NaHCO_3$

[Table 11]

Table 11: Water composition used in $CaCO_3$ stabilization test

| Ion | Concentration [ppm] |
|---|---|
| $Ca^{2+}$ | 214.3 |
| $Mg^{2+}$ | 43.4 |
| $Na^+$ | 459.7 |
| $HCO_3^-$ | 1220.0 |
| $Cl^-$ | 379.1 |
| $SO_4^{2-}$ | 171.5 |

Based on the consumption of the EDTA solution the calcium carbonate stabilization was calculated as % based on equation 7:

Formula 7

$$Stabilization\ [\%] = 100 - \frac{comp\_sample * vol\_blank * 100\%}{comp\_blank * vol\_sample}$$

eq. 7

· comp_sample: consumption EDTA-solution in mL in the sample with raw material
· comp_blank: consumption EDTA-solution in mL in the blank
· vol_sample: sample volume in the measuring cylinder in mL
· vol_blank: volume of blank solution in measuring cylinder in mL

The results are compiled in table 12.

[Table 12]

Table 12

| Polymer No. | EA [mol-%] | $M_w$ [g/mol] | CaCO$_3$ stabilization [%] |
|---|---|---|---|
| 3 | 10 | 7360 | 59.3 |
| C4 | 10 | 1040 | 28.2 |
| C5 | 10 | 4080 | 54.0 |
| 9 | 20 | 5900 | 64.5 |
| C7 | 20 | 2650 | 56.4 |
| C8 | 20 | 1030 | 22.6 |

As the results show, the copolymers of the present invention have a comparable or even superior stabilization effect as compared to analogous copolymers having however a lower molecular weight.

6) Iron oxide dispersion

To show that the copolymers according to the present invention are also useful dispersants and effectively inhibit the deposition of scale, the following test was carried out.
Ferric oxide containing test water of the composition given in table 13 was prepared.
Iron oxide containing test water of the composition given in table 13 was prepared by mixing deionized water with the below salts.
Following sources for the ionic components of the test water were used:

Source of magnesium ions: $MgSO_4 \cdot 7H_2O$, $Mg(NO_3)_2 \cdot 6\ H_2O$
Source of hydrogencarbonate ions: $NaHCO_3$
Source of chloride ions: $NaCl$
Source of sulfate ions: $MgSO_4 \cdot 7H_2O$, $Na_2SO_4$
Source of sodium ions: $NaHCO_3$, $NaCl$, $Na_2SO_4$
Source of nitrate ions: $Mg(NO_3)_2 \cdot 6\ H_2O$

[Table 13]

Table 13

| Ion | Concentration [ppm] |
|---|---|
| $Mg^{2+}$ | 15.5 |
| $Na^+$ | 256.2 |
| $HCO_3^-$ | 270.9 |

(continued)

| Ion | Concentration [ppm] |
|---|---|
| Cl⁻ | 144.4 |
| $SO_4^{2-}$ | 147.5 |
| $NO_3^-$ | 51.7 |
| $Fe_2O_3$* | 60 |
| * values are given as suspended matter | |

The pH was adjusted to 8.5. 500 ml of the prepared solution were filled into beakers and mixed with the inhibitors to be tested in a concentration of 0.04 ppm. All solutions were heated to 37.5°C in a thermostated water bath under high rotation stirring. Prior to measurement via photometer (Metrohm 662) the rotation speed was reduced and the extinction was measured at 610 nm wavelength using a probe. In each beaker the extinction was periodically measured over 6 hours using an automated unit and recorded. These data were used to obtain a curve of extinction over time. In order to eliminate the influence of the different starting extinction values, starting extinction data were further processed by approximation with a first order kinetic law. The slope of the linear regression analyses was used for further data evaluation.

The slope of the linear regression was used as parameter for the determination of relative dispersing efficiency (RDE) according to the equation 8.

Formula 8

$$RDE\ [\%] = 100 - \frac{Slope\ sample * 100\ \%}{Slope\ blank}$$

eq. 8

The results are compiled in table 14.

[Table 14]

Table 14

| Polymer No. | EA [mol-%] | $M_w$ [g/mol] | Iron oxide dispersion [%] |
|---|---|---|---|
| 1 | 5 | 7380 | 41.7 |
| C2 | 5 | 1800 | 31.0 |
| 8 | 20 | 7350 | 53.2 |
| C7 | 20 | 2650 | 37.9 |

**Claims**

1. The use of a copolymer, which consists of at least 95 % by weight, based on the total weight of the copolymer in its acid form, of a combination of polymerized units of acrylic acid and polymerized units of a $C_1$-$C_3$ alkyl acrylate, where the amount of polymerized units of the $C_1$-$C_3$ alkyl acrylate is in the range from 3 to 50 mol-%, based on the total amount of polymerized units, where at least 50 mol-% of the polymerized units of the $C_1$-$C_3$ alkyl acrylate are polymerized units of a $C_2$-$C_3$ alkyl acrylate and where the copolymer in the form of its sodium salt has a weight average molecular weight $M_w$ in the range from 5800 to 15000 g/mol, as determined by gel permeation chromatography in buffered water at pH 7, for reducing the formation of inorganic scale in water-bearing systems;

where the inorganic scale comprises at least one of the following scales: silicate-containing inorganic scale, hydroxide-containing inorganic scale other than magnesium hydroxide, such as iron(III) hydroxide and zinc hydroxide, oxide-containing inorganic scale, such as iron(III) oxide, and phosphate containing scale, such as calcium phosphate.

2. The use of claim 1, where the copolymer in the form of its sodium salt has a weight average molecular weight in the range from 5800 to 12000 g/mol.

3. The use of any one of the preceding claims, where one or both of the following conditions a) and/or b) apply:

a) the copolymer in the form of its sodium salt has a number average molecular weight $M_n$ in the range of from 1000 to 15000 g/mol, preferably in the range of from 1200 to 10000 g/mol, in particular from 1300 to 5000 and specifically from 1300 to 3000, as determined by gel permeation chromatography in buffered water at pH 7; and/or
b) the ratio of the weight average molecular weight $M_w$ to the number average molecular weight $M_n$ is in the range from 1.1 to 10, in particular in the range from 2 to 6, specifically from 3 to 5.

4. The use of any one of the preceding claims, where the amount of polymerized units of the $C_1$-$C_3$ alkyl acrylate is in the range of from 5 to 40 mol-%, preferably from 5 to 30 mol-%, in particular from 8 to 30 mol-%, and specifically from 10 to 30 mol-%, based on the total amount of polymerized units.

5. The use of claim 4, where the amount of polymerized units of the $C_1$-$C_3$ alkyl acrylate is in the range of from 10 to 25 mol-%, based on the total amount of polymerized units.

6. The use of any one of the preceding claims, where the $C_1$-$C_3$ alkyl acrylate is ethyl acrylate.

7. The use of any one of the preceding claims, where the water bearing system is a water steam circuit, a cooling water system, a desalination unit, a geothermal unit, a waste water unit or an oil well.

8. The use any one of the preceding claims, where the inorganic scale comprises at least one of the following scales: silicate-containing inorganic scale, iron(III) hydroxide, zinc hydroxide, iron(III) oxide, and calcium phosphate.

9. The use of claim 8, where the inorganic scale comprises at least one of the following scales: silicate-containing scale and hydroxide-containing inorganic scale, such as iron(III) hydroxide and zinc hydroxide.

10. The use of any one of claims 8 to 9, where the inorganic scale comprises at least one of the following scales: magnesium silicate, calcium silicate, aluminium silicate, iron(II) silicate, iron(III) silicate, iron(III) hydroxide and zinc hydroxide; where preferably the inorganic scale comprises at least one of the following scales: magnesium silicate, aluminium silicate, iron(III) hydroxide and zinc hydroxide.

11. A method for reducing the formation of inorganic scale in a water-bearing system, which comprises the addition of a copolymer as defined in any one of claims 1 to 6 to the water contained in the water bearing system.

12. The method of claim 11, for reducing the formation of inorganic scale which is as defined in any one of claims 8 to 10.

13. The method of any one of claims 11 or 12, where the water bearing system is a water steam circuit, a cooling water system, a desalination unit, a geothermal unit, a waste water unit or an oil well.

14. The method of any one of claims 11 to 13, where the copolymer is added to the water contained in the water bearing system such that the concentration of the copolymer in the water contained in the water bearing system is in the range from 0.005 to 500 $g/m^3$, preferably from 0.01 to 300 $g/m^3$, more preferably from 0.03 to 250 $g/m^3$, in particular from 0.1 to 250 $g/m^3$, specifically from 1 to 250 $g/m^3$.

15. The method of any of claims 11 to 14, where water in the water bearing system contains at least one water-soluble silicate in an amount of at least 1 ppm, calculated as $SiO_2$.

## Patentansprüche

1. Verwendung eines Copolymers, das zu wenigstens 95 Gew.-%, bezogen auf das Gesamtgewicht des Copolymers in seiner Säureform, aus einer Kombination von polymerisierten Einheiten von Acrylsäure und polymerisierten Einheiten eines $C_1$-$C_3$-Alkylacrylats besteht, wobei die Menge an polymerisierten Einheiten des $C_1$-$C_3$-Alkylacrylats im Bereich von 3 bis 50 mol-%, bezogen auf die Gesamtmenge an polymerisierten Einheiten, liegt; wobei wenigstens 50 mol-% der polymerisierten Einheiten des $C_1$-$C_3$-Alkylacrylats polymerisierte Einheiten eines $C_2$-$C_3$-Alkylacrylats sind

und wobei das Copolymer in Form seines Natriumsalzes ein gewichtsmittleres Molekulargewicht $M_w$ im Bereich von 5800 bis 15000 g/mol, wie bestimmt durch Gelpermeationschromatographie in gepuffertem Wasser bei pH 7, aufweist, zum Verringern der Bildung von anorganischer Ablagerung in wasserführenden Systemen; wobei die anorganische Ablagerung wenigstens eine der folgenden Ablagerungen umfasst: silicathaltige anorganische Ablagerung, hydroxidhaltige anorganische Ablagerung, die von Magnesiumhydroxid verschieden ist, wie z.B. Eisen(III)-hydroxid und Zinkhydroxid, oxidhaltige anorganische Ablagerung, wie z.B. Eisen(III)-oxid, und phosphathaltige Ablagerung, wie z.B. Calciumphosphat.

2. Verwendung nach Anspruch 1, wobei das Copolymer in Form seines Natriumsalzes ein gewichtsmittleres Molekulargewicht im Bereich von 5800 bis 12000 g/mol aufweist.

3. Verwendung nach einem der vorstehenden Ansprüche, wobei eine oder beide der folgenden Bedingungen a) und/oder b) gelten:

   a) das Copolymer in Form seines Natriumsalzes weist ein zahlenmittleres Molekulargewicht $M_n$ im Bereich von 1000 bis 15000 g/mol, vorzugsweise im Bereich von 1200 bis 10000 g/mol, insbesondere von 1300 bis 5000 und speziell von 1300 bis 3000, bestimmt durch Gelpermeationschromatographie in gepuffertem Wasser bei pH 7, auf und/oder
   b) das Verhältnis des gewichtsmittleren Molekulargewichts $M_w$ zum zahlenmittleren Molekulargewicht $M_n$ liegt im Bereich von 1,1 bis 10, insbesondere im Bereich von 2 bis 6, speziell von 3 bis 5.

4. Verwendung nach einem der vorstehenden Ansprüche, wobei die Menge an polymerisierten Einheiten des $C_1$-$C_3$-Alkylacrylats im Bereich von 5 bis 40 mol-%, vorzugsweise von 5 bis 30 mol-%, insbesondere von 8 bis 30 mol-% und speziell von 10 bis 30 mol-%, bezogen auf die Gesamtmenge an polymerisierten Einheiten, liegt.

5. Verwendung nach Anspruch 4, wobei die Menge an polymerisierten Einheiten des $C_1$-$C_3$-Alkylacrylats im Bereich von 10 bis 25 mol-%, bezogen auf die Gesamtmenge an polymerisierten Einheiten, liegt.

6. Verwendung nach einem der vorstehenden Ansprüche, wobei das $C_1$-$C_3$-Alkylacrylat Ethylacrylat ist.

7. Verwendung nach einem der vorstehenden Ansprüche, wobei das wasserführende System ein Wasserdampfkreislauf, ein Kühlwassersystem, eine Entsalzungseinheit, eine geothermische Einheit, eine Abwassereinheit oder eine Ölbohrung ist.

8. Verwendung nach einem der vorstehenden Ansprüche, wobei die anorganische Ablagerung wenigstens eine der folgenden Ablagerungen umfasst: silicathaltige anorganische Ablagerung, Eisen(III)-hydroxid, Zinkhydroxid, Eisen(III)-oxid und Calciumphosphat.

9. Verwendung nach Anspruch 8, wobei die anorganische Ablagerung wenigstens eine der folgenden Ablagerungen umfasst: silicathaltige Ablagerung und hydroxidhaltige anorganische Ablagerung, wie z.B. Eisen(III)-hydroxid und Zinkhydroxid.

10. Verwendung nach einem der Ansprüche 8 bis 9, wobei die anorganische Ablagerung wenigstens eine der folgenden Ablagerungen umfasst: Magnesiumsilicat, Calciumsilicat, Aluminiumsilicat, Eisen(II)-silicat, Eisen(III)-silicat, Eisen(III)-hydroxid und Zinkhydroxid; wobei vorzugsweise die anorganische Ablagerung wenigstens eine der folgenden Ablagerungen umfasst: Magnesiumsilicat, Aluminiumsilicat, Eisen(III)-hydroxid und Zinkhydroxid.

11. Verfahren zum Verringern der Bildung von anorganischer Ablagerung in einem wasserführenden System, umfassend die Zugabe eines Copolymers nach einem der Ansprüche 1 bis 6 zu dem im wasserführenden System enthaltenen Wasser.

12. Verfahren nach Anspruch 11 zum Verringern der Bildung von anorganischer Ablagerung, die wie in einem der Ansprüche 8 bis 10 definiert ist.

13. Verfahren nach einem der Ansprüche 11 oder 12, wobei das wasserführende System ein Wasserdampfkreislauf, ein Kühlwassersystem, eine Entsalzungseinheit, eine geothermische Einheit, eine Abwassereinheit oder eine Ölbohrung ist.

**14.** Verfahren nach einem der Ansprüche 11 bis 13, wobei das Copolymer zu dem im wasserführenden System enthaltenen Wasser derart zugegeben wird, dass die Konzentration des Copolymers in dem im wasserführenden System enthaltenen Wasser im Bereich von 0,005 bis 500 g/m$^3$, vorzugsweise von 0,01 bis 300 g/m$^3$, stärker bevorzugt von 0,03 bis 250 g/m$^3$, insbesondere von 0,1 bis 250 g/m$^3$, speziell von 1 bis 250 g/m$^3$, liegt.

**15.** Verfahren nach einem der Ansprüche 11 bis 14, wobei Wasser in dem wasserführenden System wenigstens ein wasserlösliches Silicat in einer Menge von wenigstens 1 ppm, berechnet als SiO$_2$, enthält.

**Revendications**

**1.** Utilisation d'un copolymère, qui est constitué d'au moins 95 % en poids, par rapport au poids total du copolymère sous sa forme acide, d'une combinaison d'unités polymérisées d'acide acrylique et d'unités polymérisées d'un acrylate d'alkyle en C$_1$-C$_3$, la quantité d'unités polymérisées de l'acrylate d'alkyle en C$_1$-C$_3$ étant dans la plage allant de 3 à 50 % en mole, par rapport à la quantité totale d'unités polymérisées, au moins 50 % en mole des unités polymérisées de l'acrylate d'alkyle en C$_1$-C$_3$ étant des unités polymérisées d'un acrylate d'alkyle en C$_2$-C$_3$ et le copolymère sous la forme de son sel de sodium ayant une masse moléculaire moyenne en poids M$_w$, telle que déterminée par chromatographie par perméation de gel dans de l'eau tamponnée à pH 7, dans la plage allant de 5800 à 15000 g/mol, pour réduire la formation de dépôts incrustants inorganiques dans des systèmes renfermant de l'eau ;
le dépôt incrustant inorganique comprenant au moins l'un des dépôts incrustants suivants : du dépôt incrustant inorganique contenant un silicate, du dépôt incrustant inorganique contenant un hydroxyde autre que l'hydroxyde de magnésium, tel que l'hydroxyde de fer(III) et l'hydroxyde de zinc, du dépôt incrustant inorganique contenant un oxyde, tel que l'oxyde de fer(III), et du dépôt incrustant contenant un phosphate, tel que le phosphate de calcium.

**2.** Utilisation selon la revendication 1, le copolymère sous la forme de son sel de sodium ayant une masse moléculaire moyenne en poids dans la plage allant de 5800 à 12000 g/mol.

**3.** Utilisation selon l'une quelconque des revendications précédentes, l'une des conditions a) et/ou b) suivantes ou les deux s'appliquant :

a) le copolymère sous la forme de son sel de sodium a une masse moléculaire moyenne en nombre M$_n$, telle que déterminée par chromatographie par perméation de gel dans de l'eau tamponnée à pH 7, dans la plage allant de 1000 à 15000 g/mol, de préférence dans la plage allant de 1200 à 10000 g/mol, en particulier de 1300 à 5000 et plus précisément de 1300 à 3000 ; et/ou
b) le rapport de la masse moléculaire moyenne en poids M$_w$ à la masse moléculaire moyenne en nombre M$_n$ est dans la plage allant de 1,1 à 10, en particulier dans la plage allant de 2 à 6, plus précisément de 3 à 5.

**4.** Utilisation selon l'une quelconque des revendications précédentes, la quantité d'unités polymérisées de l'acrylate d'alkyle en C$_1$-C$_3$ étant dans la plage allant de 5 à 40 % en mole, de préférence de 5 à 30 % en mole, en particulier de 8 à 30 % en mole et plus précisément de 10 à 30 % en mole, par rapport à la quantité totale d'unités polymérisées.

**5.** Utilisation selon la revendication 4, la quantité d'unités polymérisées de l'acrylate d'alkyle en C$_1$-C$_3$ étant dans la plage allant de 10 à 25 % en mole, par rapport à la quantité totale d'unités polymérisées.

**6.** Utilisation selon l'une quelconque des revendications précédentes, l'acrylate d'alkyle en C$_1$-C$_3$ étant l'acrylate d'éthyle.

**7.** Utilisation selon l'une quelconque des revendications précédentes, le système renfermant de l'eau étant un circuit de vapeur d'eau, un système d'eau de refroidissement, une unité de dessalement, une unité géothermique, une unité d'eaux usées ou un puits de pétrole.

**8.** Utilisation selon l'une quelconque des revendications précédentes, le dépôt incrustant inorganique comprenant au moins l'un des dépôts incrustants suivants : du dépôt incrustant inorganique contenant un silicate, de l'hydroxyde de fer(III), de l'hydroxyde de zinc, de l'oxyde de fer(III) et du phosphate de calcium.

**9.** Utilisation selon la revendication 8, le dépôt incrustant inorganique comprenant au moins l'un des dépôts incrustants suivants : du dépôt incrustant contenant un silicate et du dépôt incrustant inorganique contenant un hydroxyde, tel que l'hydroxyde de fer(III) et l'hydroxyde de zinc.

10. Utilisation selon l'une quelconque des revendications 8 à 9, le dépôt incrustant inorganique comprenant au moins l'un des dépôts incrustants suivants : du silicate de magnésium, du silicate de calcium, du silicate d'aluminium, du silicate de fer(II), du silicate de fer(III), de l'hydroxyde de fer(III) et de l'hydroxyde de zinc ; le dépôt incrustant inorganique comprenant de préférence au moins l'un des dépôts incrustants suivants : du silicate de magnésium, du silicate d'aluminium, de l'hydroxyde de fer(III) et de l'hydroxyde de zinc.

11. Procédé pour réduire la formation de dépôt incrustant inorganique dans un système renfermant de l'eau, qui comprend l'ajout d'un copolymère tel que défini dans l'une quelconque des revendications 1 à 6 à l'eau contenue dans le système renfermant de l'eau.

12. Procédé selon la revendication 11, pour réduire la formation de dépôt incrustant inorganique qui est tel que défini dans l'une quelconque des revendications 8 à 10.

13. Procédé selon l'une quelconque des revendications 11 ou 12, le système renfermant de l'eau étant un circuit de vapeur d'eau, un système d'eau de refroidissement, une unité de dessalement, une unité géothermique, une unité d'eaux usées ou un puits de pétrole.

14. Procédé selon l'une quelconque des revendications 11 à 13, le copolymère étant ajouté à l'eau contenue dans le système renfermant de l'eau de façon telle que la concentration du copolymère dans l'eau contenue dans le système renfermant de l'eau est dans la plage allant de 0,005 à 500 g/m$^3$, de préférence de 0,01 à 300 g/m$^3$, plus préférablement de 0,03 à 250 g/m$^3$, en particulier de 0,1 à 250 g/m$^3$, plus précisément de 1 à 250 g/m$^3$.

15. Procédé selon l'une quelconque des revendications 11 à 14, l'eau dans le système renfermant de l'eau contenant au moins un silicate hydrosoluble en une quantité, calculée en termes de SiO$_2$, d'au moins 1 ppm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4008164 A
- US 4517098 A
- EP 0123482 A2
- AU 59137
- US 4839417 A
- US 4797224 A

### Non-patent literature cited in the description

- **D.L. GALLUP**. Mineral Scales in Biological and Industrial Systems. CRC Press, 2013, 201
- **S. KOLTZENBURG** ; **M. MASKOS** ; **O. NUYKEN**. Polymer Chemistry. Springer-Verlag, 2017
- **D. BRAUN et al.** *Praktikum der Makromolekularen Stoffe*